# EUROPÄISCHE PATENTANMELDUNG

(11) **EP 2 050 375 A1**
(43) Veröffentlichungstag der Anmeldung: **22.04.2009**
(21) Anmeldenummer: 08405232.3
(22) Anmeldetag: 22.09.2008
(51) Int. Cl.: A47J 42/10

(54) **Mahlwerkzeug und Verfahren zu dessen Herstellung**

(30) Priorität: 16.10.2007 CH 16152007
(71) Anmelder: Eldom Rothrist AG, 4852 Rothrist (CH)
(72) Erfinder: Ackermann, René, 4703 Kestenholz (CH); Ruckstuhl, Stephan, 4623 Neuendorf (CH)
(74) Vertreter: Bremi, Tobias Hans

(57) **Zusammenfassung**

Beschrieben wird ein Mahlwerkzeug (1) zur Zerkleinerung von körnigem Material aus dem Lebensmittelbereich, insbesondere von Kaffeebohnen. Spezifisch geht es um ein Verfahren zur Herstellung der innenseitigen Zahnung (47, 48) eines Mahlrings (2) für ein Mahlwerk, insbesondere zur Zerkleinerung von körnigem Mahlgut wie Getreidekorn, Kaffee, Pfeffer, Salz oder Zucker, wobei der Mahlring (2) eine Durchgangsbohrung zur Aufnahme eines entsprechenden Mahlkegels (3) aufweist, und diese Durchgangsbohrung in Förderrichtung des Mahlguts im oberen Bereich (67) konisch zulaufend und im unteren Bereich (66) konisch erweiternd unter Ausbildung einer Mittelkante (53) ausgebildet ist. Das Verfahren ist **dadurch gekennzeichnet, dass** ausgehend von einem Rohling mit flachen Kegelmantelinnenflächen die innenseitige Zahnung (47, 48) im oberen Bereich (67) und/oder im unteren Bereich (66) im wesentlichen ausschliesslich unter Zuhilfenahme eines Scheibenfräsers (61, 62, 63) hergestellt wird..

## Beschreibung

### TECHNISCHES GEBIET

Die vorliegende Erfindung betrifft ein Mahlwerkzeug zur Zerkleinerung von körnigem Material aus dem Lebensmittelbereich, insbesondere Kaffeebohnen, sowie ein Verfahren zu dessen Herstellung.

### STAND DER TECHNIK

Kernstück eines Mahlwerkzeugs ist das eigentliche Mahlwerk, in welchem das Mahlgut, wie beispielsweise Kaffeebohnen, zerkleinert wird. Es handelt sich dabei typischerweise um zwei aus einem äusserst harten Material (gehärtetes Metall oder Keramik) gefertigte sich relativ zueinander bewegende Elemente, zwischen welchen das Mahlgut verkleinert wird.

Zu diesem Zweck verfügen die beiden Elemente über eine Zahnung. Im Zusammenhang mit Kaffeemühlen und Pfeffermühlen wird in der Regel als erstes Element ein Mahlring verwendet, welcher über eine Durchgangsbohrung verfügt, auf deren Innenseite die genannte Zahlung vorgesehen ist. In dieser Durchgangsbohrung ist als zweites Element ein so genannter Mahlkegel koaxial mit dem Mahlring angeordnet. Der Mahlkegel verfügt auf seiner Aussenseite ebenfalls über eine Zahnung.

Es wird nun entweder der Mahlkegel bezüglich feststehendem Mahlring gedreht oder es wird der Mahlring bezüglich feststehendem Mahlkegel gedreht, und das im Mahlspalt angeordnete respektive in diesen eingeführte Mahlgut wird zwischen der Zahnung der beiden Elemente zerkleinert, bis es eine genügend kleine Korngrösse aufweist, dass es nach unten aus dem Mahlspalt in einen Auffangbereich austreten kann.

Es ist nach dem Stand der Technik für die optimale Zerkleinerung auf eine möglichst homogene und zuverlässige Korngrössenverteilung im Zusammenhang mit einem solchen Mahlwerk üblich, den Mahlkegel nach unten konisch erweiternd auszubilden.

Typischerweise verfügt der Mahlkegel des weiteren über eine Zahnung, welche im oberen Bereich mit geringem Durchmesser grob ausgebildet ist (zur Ausbildung der so genannten Fördernuten), und welche im unteren Bereich mit erweitertem Durchmesser feiner ausgebildet ist.

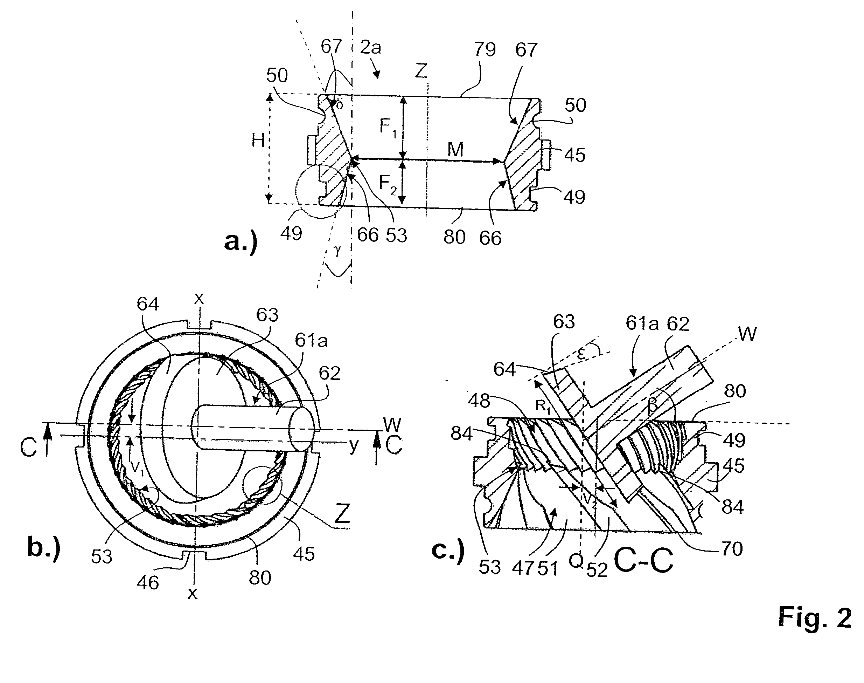

Ein Beispiel eines solchen Mahlkegels dieses generellen Typs nach dem Stand der Technik ist in der DE 195 14 794 in Figur 2 dargestellt.

Der Mahlring auf der anderen Seite verfügt normalerweise nicht über eine zylindrische Durchgangsbohrung sondern über eine Durchgangsbohrung, welche sich zunächst von oben konisch verjüngt (gewissermassen trichterförmig) und anschliessend nach unten hin wieder konisch erweitert, so dass sich gewissermassen ein umlaufender ungefähr auf halber Höhe angeordneter Kamm ausbildet.

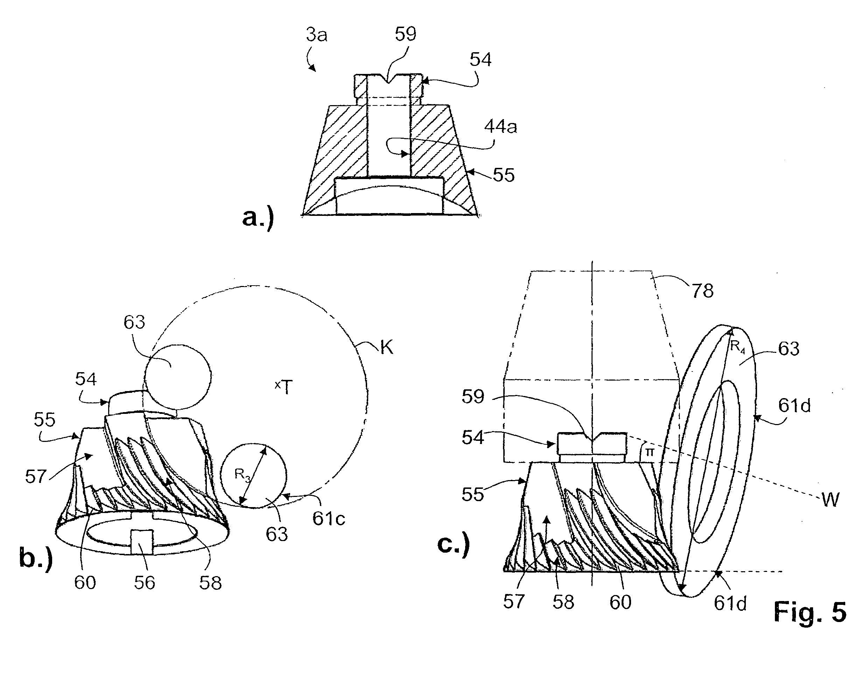

Ein solcher Mahlring nach dem Stand der Technik ist beispielsweise in der DE 19514794 in Figur 5 dargestellt.

Typischerweise ist der obere trichterförmige Bereich mit einer groben Zahnung zur Erfassung der Kaffeebohnen und zur Führung der Kaffeebohnen in den Mahlspalt versehen, während der untere konisch erweiternde Bereich mit einer feineren Zahnung versehen ist. Die Steigung der unteren konischen Erweiterung in einem axialen Schnitt des Mahlwerks entspricht ungefähr der Steigung der konischen Ausbildung des Mahlkegels, und entsprechend entsteht bei eingeführtem Mahlkegel im oberen Bereich oberhalb des Kamms eine nach oben offene ringförmige Öffnung zur Aufnahme der Kaffeebohnen, und unterhalb des Kamms verlaufen die Flächen von Mahlkegel und Mahlring ungefähr parallel unter Ausbildung des eigentlichen Mahlspaltes zur Bildung des feinen Pulvers.

Die Feinheit bis zu erzeugenden Mahlgut es kann bei einem solchen Mahlwerk eingestellt werden, indem die relative axiale Position des Mahlkegel zum Mahlring verschoben wird.

Wie in der DE 19514794 ausgeführt wird, wird ein solcher Mahlkegel typischerweise erzeugt, indem die an dessen konischer Oberfläche angeordneten Mahlzähne durch Fräsen aus einem Kegelvollprofil unter vertikaler Führung eines Scheibenfräsers relativ zur Kegeloberfläche abgetragen werden.

Im Gegensatz dazu wird der Mahlring auf seiner Innenseite in der genannten Durchgangsbohrung zur Ausbildung der Aussenzähne im Mahlringinnenmantel durch zerspanendes Stossen mittels eines Stechmeissels aus einem glatten Kegelprofil hergestellt. Aufgrund der engen Platzverhältnisse und der Geometrie der zu erzeugenden Aussenzähne im Mahlring erlaubt der Mahlring nach dem Stand der Technik und dem besten Wissen des Fachmanns keine anderen Herstellungsverfahren.

### DARSTELLUNG DER ERFINDUNG

Der Gegenstand der vorliegenden Erfindung besteht nun unter anderem darin, ein neuartiges Verfahren zur Herstellung eines Mahlwerks, insbesondere eines zugehörigen Mahlrings zur Verfügung zu stellen sowie unter Verwendung dieses Verfahrens hergestellte Mahlringe.

Entsprechend betrifft die vorliegende Erfindung ein Verfahren zur Herstellung der innenseitigen Zahnung eines Mahlrings für ein Mahlwerk, insbesondere zur Zerkleinerung von körnigem Mahlgut wie Getreidekorn, Kaffee, Pfeffer, Salz oder Zucker. Dabei verfügt der Mahlring über eine Durchgangsbohrung zur Aufnahme eines entsprechenden Mahlkegels, und die Durchgangsbohrung ist in Förderrichtung des Mahlguts im oberen Bereich konisch zulaufend ausgebildet und im unteren Bereich konisch erweiternd unter Ausbildung einer Mittelkante ausgebildet.

Wie bereits eingangs erläutert, werden nach dem Stand der Technik derartige Mahlringe infolge der Platzverhältnisse und der für einen hochwertigen Mahlvorgang erforderlichen Geometrie der Zahnung durch zerspanendes Stossen mittels eines Stechmeissels aus einem glatten Kegelprofil hergestellt. Es hat sich nun aber unerwarteter Weise herausgestellt, dass es, entgegen den Erwartungen des Fachmanns in diesem Gebiet, möglich ist, die Zahnung unter Verwendung eines Scheibenfräsers auszubilden. Unerwartet ist daran, dass es möglich ist, unter dem knappen Platzverhältnissen auf den Kegelmantelinnenflächen mit einem Scheibenfräser in einem wesentlich effizienteren und kostengünstigeren Verfahren eine Zahnung herzustellen, welche zudem auch noch eine erhöhte Effektivität des Mahlvorgangs gewährleisten kann. Insbesondere ist es namentlich möglich, die Mahlgeschwindigkeit durch die in diesem Verfahren erzeugbare Geometrie wesentlich zu erhöhen, und auch die Nachhaltigkeit einer gleich bleibenden Mahlmenge und Mahlqualität wird durch einen nach dem Verfahren hergestellten Mahlring erhöht. Entsprechend ist das erfindungsgemässe Verfahren dadurch gekennzeichnet, dass ausgehend von einem Rohling mit flachen Kegelmantelinnenflächen (beispielsweise hergestellt durch eine drehende Verarbeitung aus Stangenmaterial) die innenseitige Zahnung im oberen Bereich und/oder im unteren Bereich im wesentlichen ausschliesslich unter Zuhilfenahme eines Scheibenfräsers hergestellt wird. Erfindungsgemäss wird also wenigstens einer der beiden Bereiche mit einem solchen Verfahren hergestellt, bevorzugt wird die innenseitige Zahnung sowohl im oberen Bereich als auch im unteren Bereich ausschliesslich unter Zuhilfenahme des Scheibenfräsers hergestellt, wobei aber vorzugsweise für die beiden Bereiche unterschiedlich ausgebildete Scheibenfräsers verwendet werden.

Bevorzugtermassen besteht der Rohling aus Metall, insbesondere aus gehärtetem Metall und/oder mit gehärteter Oberfläche, insbesondere bevorzugt aus Automatenstahl und/oder mit einer Härte von wenigstens HRC 60, bevorzugt im Bereich von HRC 64. eine erste bevorzugte Ausführungsform ist dadurch gekennzeichnet, dass die innenseitige Zahnung im oberen Bereich durch einen ersten Scheibenfräser hergestellt wird, dessen Scheibe auf der umlaufenden Aussenfläche nach vorne konisch verjüngend ausgebildet ist. Die konische Verjüngung ist dabei vorzugsweise so ausgebildet, dass der Schliffwinkel, definiert als Winkel (µ) im axialen Schnitt durch das Werkzeug zwischen einer zylindrischen Aussenfläche und der tatsächlich vorliegenden konisch verjüngenden Aussenfläche, im Bereich von 10-60°, bevorzugt im Bereich von 20-40°, insbesondere bevorzugt im Bereich von 25-35° liegt.

Kritisch im Zusammenhang mit der Verwendung eines Scheibenfräsers und einerseits der Möglichkeit der Bearbeitung der innen liegenden Fläche und andererseits der Möglichkeit der Ausbildung einer optimalen Zahnung ist nicht nur die Geometrie der umlaufenden Aussenfläche sondern auch der Aussendurchmesser des Werkzeugs. Bevorzugtermassen ist in diesem Zusammenhang der maximale Aussendurchmesser des ersten Scheibenfräsers im Bereich nicht mehr als 10% kleiner als der Innendurchmesser der Durchgangsbohrung im Bereich der Mittelkante und kleiner als der Innendurchmesser an der Oberkante der Kegelmantelinnenfläche im oberen Bereich des Mahlrings. Mit anderen Worten wird ein möglichst grosser Scheibenfräser, welcher gerade noch in den zu bearbeitenden Bereich eingeführt werden kann, verwendet. Es zeigt sich nun, dass ein solcher grosser Scheibenfräser, insbesondere wenn mit der oben beschriebenen umlaufenden Aussenfläche ausgebildet, in der Lage ist, eine optimale Geometrie der Fördernuten im oberen Bereich zu erzeugen. So ist es beispielsweise möglich und bevorzugt, wenn der maximale Aussendurchmesser des ersten Scheibenfräsers im wesentlichen gleich ist wie der Innendurchmesser der Durchgangsbohrung im Bereich der Mittelkante, bevorzugt im Bereich von +/- 5% des Innendurchmessers der Durchgangsbohrung im Bereich der Mittelkante.

Wichtig für die Ausbildung der vorteilhaften Geometrie ist unter anderem auch die Orientierung des Scheibenfräsers relativ zum Mahlring beim Herstellungsprozess. Gemäss einer weiteren bevorzugten Ausführungsform wird der erste Scheibenfräser im gesamten Herstellungsprozess für die innenseitige Zahnung im oberen Bereich unter einem festgelegten Anstellwinkel θ, definiert als Winkel zwischen der Scheibennormalen und einer Ebene senkrecht zur Hauptachse des Mahlrings, geführt. Dieser Anstellwinkel θ liegt bevorzugtermassen im Bereich von 10-80°, insbesondere im Bereich von 30-60°, insbesondere bevorzugt im Bereich von 35-50°.

Neben dem Anstellwinkel ist auch die Führung des Scheibenfräsers bei der Herstellung der Nut für die Formgebung der Nut im oberen Bereich wichtig. Gemäss einer weiteren bevorzugten Ausführungsform wird der erste Scheibenfräser zur Herstellung jeweils einer Nut an der Oberkante des oberen Bereichs des Mahlrings an der Kegelmantelinnenfläche in einer Startposition angesetzt und anschliessend unter einem Winkel, welcher bevorzugtermassen spitzer ist als der Winkel, welchen die Kegelmantelinnenfläche im oberen Bereich mit der Ringnormalen einschliesst, unter Ausbildung der jeweiligen Nut zur Mittelkante zu einer Endposition geführt. Dabei wird so gefahren, dass die Nut zur Mittelkante hin zunehmend tiefer wird. Vorzugsweise wird dabei so vorgegangen, dass die Führung von der Startposition zur Endposition zur Kegelmantelinnenfläche hin (das heisst gewissermassen radial nach aussen) gekrümmt erfolgt, wobei insbesondere bevorzugt die Endposition so weit im Inneren zur Mittelkante des Mahlrings liegt, dass sich die Nut wenigstens teilweise in den unteren Bereich erstreckt so dass eine optimale Einführung des Mahlguts in den Mahlspalt gewährleistet werden kann.

Bevorzugtermassen werden im oberen Bereich zwischen 5-15 Nuten bevorzugt zwischen 7-12 Nuten regelmässig über den Umfang der Kegelmantelinnenfläche verteilt gefertigt. Generell haben diese Nuten vorzugsweise an der tiefsten Stelle an der Oberkante eine Tiefe im Bereich von 0.5 -4 mm, insbesondere bevorzugt im Bereich von 1-3 mm, und an der tiefsten Stelle eine grössere Tiefe, insbesondere bevorzugt im Bereich von 2-6, ganz besonders bevorzugt im Bereich von 3-5 mm, und die Neigung der Kanten der benachbarten Nuten führt zur Ausbildung von die Zähne bildenden, verdreht zum Mahlspalt führenden Zahnvorsprüngen.

Generell kann gesagt werden, dass bevorzugt ist, wenn der obere Bereich an seiner Oberkante im unbearbeiteten Zustand (das heisst als Rohling) einen Durchmesser im Bereich von 2-6 cm, bevorzugt im Bereich von 3-4 cm aufweist. Generell kann des weiteren gesagt werden, dass der Mahlring im Bereich der Mittelkante im noch nicht gezahnten Zustand einen Durchmesser im Bereich von 1.5-5.5 cm, bevorzugt im Bereich von 2-3 cm aufweist, und/oder das der untere Bereich an seiner Unterkante im unbearbeiteten Zustand einen Durchmesser im Bereich von 1.8-5.8 cm, bevorzugt im Bereich von 2.5-3.5 cm aufweist.

Auch die feine Zahnung im unteren Bereich kann unter Verwendung eines Scheibenfräsers hergestellt werden. Dies geschieht bevorzugtermassen gemäss einer weiteren Ausführungsform so, dass die innenseitige Zahnung im unteren Bereich durch einen zweiten (vom ersten verschiedenen) Scheibenfräser hergestellt wird, dessen Scheibe auf der umlaufenden Aussenfläche nach vorne konisch erweiternd ist, wobei bevorzugtermassen der Schliffwinkel, definiert als Winkel ε im axialen Schnitt durch das Werkzeug zwischen einer zylindrischen Aussenfläche und der tatsächlich vorliegenden konisch erweiternden Aussenfläche, im Bereich von 5-45 °, bevorzugt im Bereich von 10-30°, insbesondere bevorzugt im Bereich von 12-20° liegt. Generell ist bevorzugtermassen der maximale Aussendurchmesser des zweiten Scheibenfräsers im Bereich nicht mehr als 10% kleiner als der Innendurchmesser der Durchgangsbohrung im Bereich der Mittelkante und kleiner als der Innendurchmesser an der Unterkante der Kegelmantelinnenflächen im unteren Bereich des Mahlrings. Auch hier wird also mit einem möglichst grossen, aber an seiner Umfangsfläche anders gestaltenden Scheibenfräser gearbeitet.

Der maximale Aussendurchmesser des zweiten Scheibenfräsers ist bevorzugt im wesentlichen gleich wie der Innendurchmesser der Durchgangsbohrung im Bereich der Mittelkante, insbesondere bevorzugt im Bereich von ± 5% des Innendurchmessers der Durchgangsbohrung im Bereich der Mittelkante.

Bei der Herstellung der feinen Zahnung im unteren Bereich wird bevorzugtermassen gemäss einer weiteren Ausführungsform so vorgegangen, dass der zweite Scheibenfräser im gesamten Herstellungsprozess für die innenseitige Zahnung im unteren Bereich unter einem festgelegten Anstellwinkel (β), definiert als Winkel zwischen der scheibennormalen und einer Ebene senkrecht zur Hauptachse des Mahlrings, geführt wird. Es ist also sowohl bei der Bearbeitung des oberen wie auch bei der Bearbeitung des unteren Bereichs so, dass der Anstellwinkel konstant gehalten werden kann, was das Verfahren zur Herstellung wesentlich vereinfacht und zuverlässiger sowie kostengünstiger werden lässt, und insbesondere auch das Werkzeug weniger belastet. Dieser Anstellwinkel β liegt bevorzugtermassen im Bereich von 20-45°, vorzugsweise im Bereich von 25-40°, insbesondere bevorzugt im Bereich von 30-38°.
Bei der eigentlichen Herstellung eines jeweiligen Zahns der feinen Zahnung wird vorzugsweise so vorgegangen, dass der zweite Scheibenfräser zur Herstellung jeweils einer Nut der Feinzahnung im wesentlichen ausschliesslich in Form eines Einstichs des zweiten Scheibenfräsers in einer Richtung im wesentlichen senkrecht zur Flächennormalen der Kegelmantelinnenfläche im unteren Bereich an der Stelle des Einstichs geführt wird. Dabei liegt die jeweilige Ansatzstelle für den Einstich auf einem Viertel der axialen Höhe oder oberhalb der viertel axialen Höhe zwischen Unterkante und Mittelkante, vorzugsweise zwischen 1/4 und 3/4 der axialen Höhe zwischen Unterkante und Mittelkante.

Bevorzugtermassen wird, insbesondere bei einer axialen Dicke des Scheibenfräsers im Bereich von 3 - 8, bevorzugt 4-6 mm (dies ist die generell bevorzugte Dicke sowohl für den ersten Scheibenfräser wie auch für den zweiten Scheibenfräser), beim Ansatz des zweiten Scheibenfräsers beim Beginn des Prozesses der vordere Achspunkt der Scheibe des zweiten Scheibenfräsers (zentraler Mittelpunkt der nach vorne freiliegenden Kreisfläche des Scheibenfräsers) von der zentralen Hauptachse zur Mittelkante um einen Versatz versetzt ist, wobei dieser Versatz im Bereich von 1-4 mm, insbesondere bevorzugt im Bereich von 1-3 mm liegt.

Generell gilt bevorzugtermassen, dass die Feinzahnung im Bereich der Unterkante des unteren Bereichs eine Tiefe im Bereich von 0.1-1 mm, insbesondere bevorzugt im Bereich von 0.2-0.4 mm aufweist, und/oder an der tiefsten Stelle an der Kegelmantelinnenfläche im unteren Bereich eine Tiefe im Bereich von 0.5-2 mm, insbesondere bevorzugt im Bereich von 0.8-1.5 mm.

Im unteren Bereich werden bevorzugter Weise zwischen 2-6, bevorzugt 4-5 Kerben der Feinzahnung in bevorzugt gleichmässiger umfangsmässiger Verteilung pro Kerbe im oberen Bereich vorgesehen.

Typischerweise liegt der Winkel δ, welchen die Kegelmantelinnenfläche im oberen Bereich mit der Ringnormalen einschliesst, im Bereich von 15-30°, bevorzugt 20-25 °, insbesondere bevorzugt im Bereich von 21-23°. Des weiteren liegt typischerweise der Winkel γ, welchen die Kegelmantelinnenflächen im unteren Bereich mit der Ringnormalen einschliesst, im Bereich von 10-20°, bevorzugt 12-18°, insbesondere bevorzugt 14-16°.

Bei der Herstellung der feinen Zahnung im unteren Bereich wird bevorzugtermassen gemäss einer weiteren Ausführungsform so vorgegangen, dass am Mahlring und/oder an dem zugehörigen Mahlkegel (bevorzugt an beiden Teilen), insbesondere im an die Unterkante angrenzenden Bereich der Feinzahnung, und bevorzugt über eine wesentlich geringere Höhe als die minimale Höhe (weniger als 50% bevorzugt weniger als oder im Bereich von 30% der minimalen Höhe) der Feinzahnung, Abschnitte mit im wesentlichen konusförmiger Oberfläche (bezogen auf die Hauptachse des Werkzeugs) ausgebildet werden oder belassen bleiben. Dies bevorzugt und namentlich so, dass sich in diesem Bereich ein kurzer paralleler Mahlspalt ausbildet. Dieser parallele Bereich schliesst bevorzugt den Mahlspalt austrittsseitig ab. Bevorzugtermassen werden diese Abschnitte erzeugt, indem die konische Oberfläche des Rohlings in diesen Bereichen nicht mit dem Scheibenfräser bearbeitet wird oder nur in einer Weise, dass die konische Oberfläche erhalten bleibt.

Des weiteren betrifft die vorliegende Erfindung einen Mahlring hergestellt nach einem Verfahren, wie es oben beschrieben wurde. Ein solcher Mahlring kann Verwendung finden im Zusammenhang mit einer Kaffeemühle, Pfeffermühle, Zuckermühle etc.

Auch betrifft sie einen Mahlkegel, hergestellt in einem Verfahren, wie es weiter unten angegeben ist.
Entsprechend betrifft die vorliegende Erfindung auch ein Mahlwerk, ein Mahlwerkzeug oder eine Kaffeemaschine mit einem solchen Mahlring und/oder Mahlkegel.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:

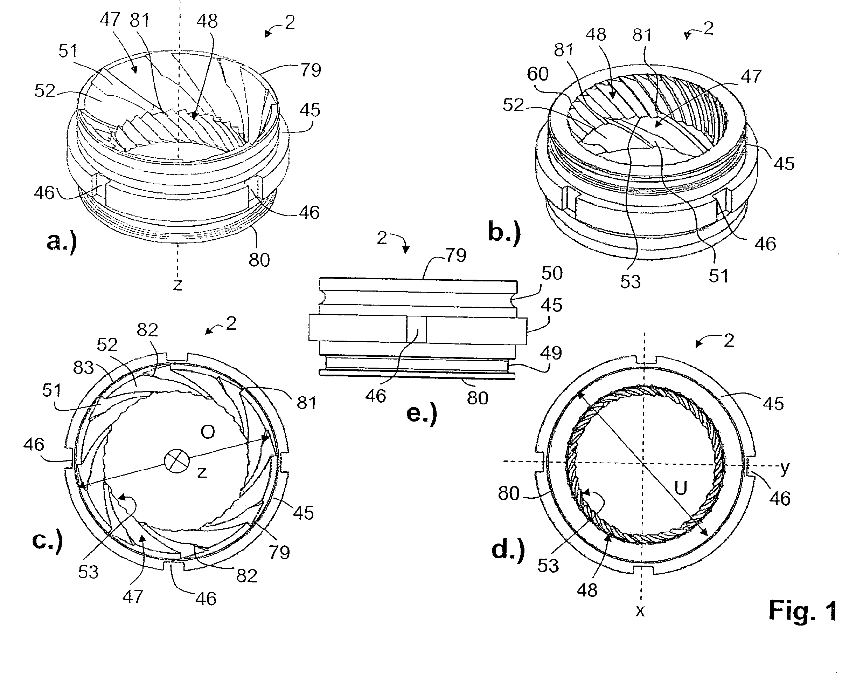

- Fig. 1: verschiedene Ansichten eines Mahlrings gemäss eines ersten Ausführungsbeispiels der Erfindung; wobei Fig. 1a den Mahlring in einer perspektivischen Ansicht von oben zeigt; Fig. 1b eine perspektivische Ansicht eines um 180 Grad um eine erste Querrichtung X gekippten Mahlrings von oben zeigt, und Fig. 1c den Mahlring von oben, Fig. 1d
- Fig. 2: den Mahlring von unten und Fig. 1e den Mahlring von der Seite zeigt. weitere Ansichten des Mahlrings; wobei Fig. 2a einen mittigen axialen Schnitt durch die zweite Querrichtung Y bzw. durch zwei einander gegenüberliegende Axialnuten im Mahlring in seiner Rohling-Form 2a, d.h. noch ohne Zahnung, zeigt; Fig. 2b eine Ansicht von unten mit einem zur Feinzahnungsfräsung angesetzten Werkzeug zeigt; und Fig. 2c einen axialen Schnitt durch den Mahlring durch die zur zweiten Querrichtung Y versetzten Schnittlinie C-C von Fig. 2b zeigt;

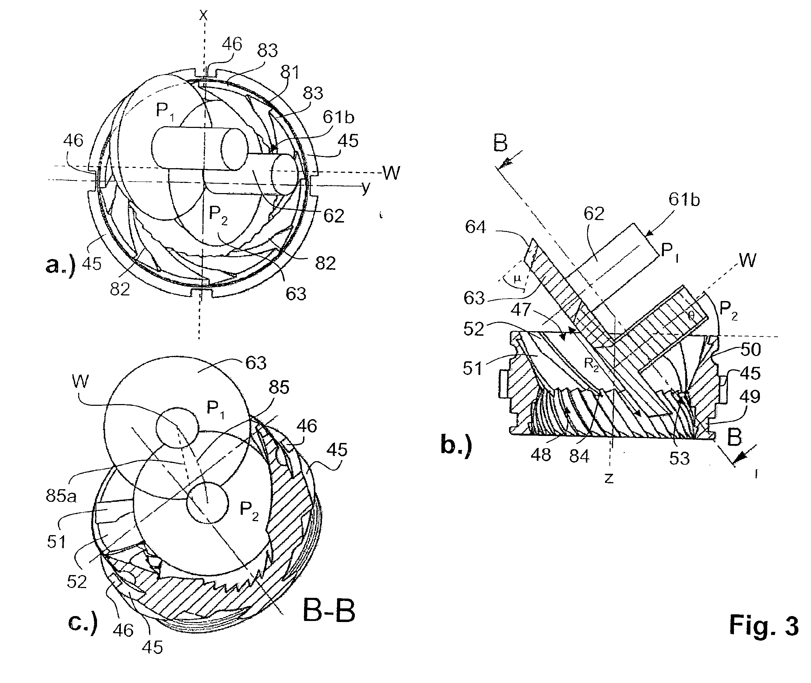

- Fig. 3: weitere Ansichten des Mahlrings; wobei Fig. 3a den Mahlring von oben mit zwei schematischen Positionen des Werkzeugs während der Grobzahnungsfräsung zeigt; Fig. 3b einen Schnitt durch den Mahlring durch die zweite Querrichtung Y zeigt, wobei zwei schematische Positionen des Werkzeugs während der Grobzahnungsfräsung dargestellt sind; und Fig. 3c einen Schnitt durch die in Fig. 3b markierte Schnittlinie B-B zeigt.

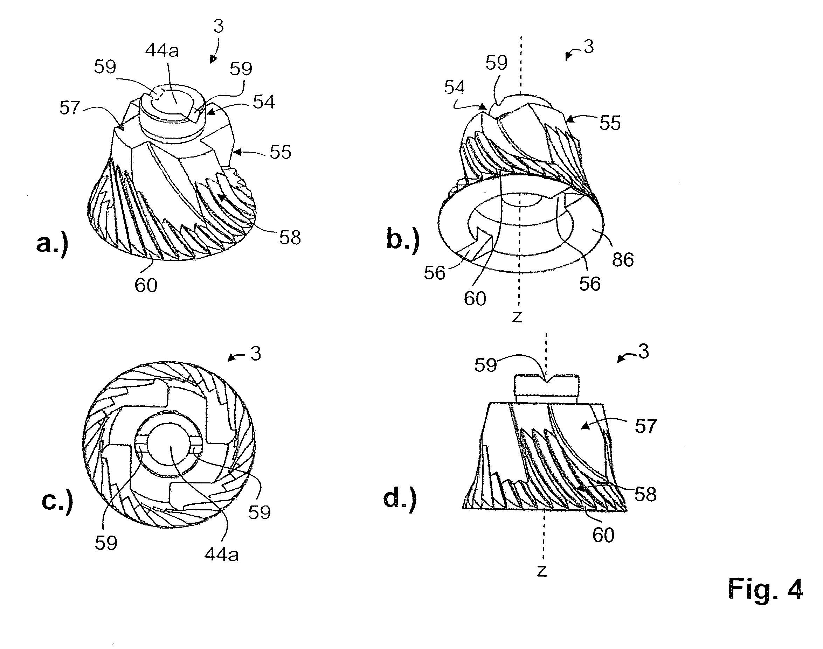

- Fig. 4: vier verschiedene Ansichten eines Mahlkegels nach einem ersten Ausführungsbeispiel; wobei in Fig. 4a der Mahlkegel in einer perspektivischen Ansicht von schräg oben und in Fig. 4b von schräg unten dargestellt ist; und wobei in Fig. 4c der Mahlkegel von oben und in Fig. 4d von der Seite dargestellt ist.
- Fig. 5: drei weitere Ansichten des Mahlkegels; wobei in Fig. 5a ein axialer Schnitt durch den Mahlkegel dargestellt ist; in Fig. 5b der Mahlkegel perspektivisch von schräg unten dargestellt ist, wobei schematisch zwei Positionen des Werkzeugs und dessen Bewegungsbahn während der Grobzahnungsfräsung des Mahlkegels dargestellt sind; und in Fig. 5c. ein Mahlkegel von der Seite mit einer schematischen Position des Werkzeugs während der Feinzahnungsfräsung des Mahlkegels dargestellt ist, und in der die Position eines Folgekegels relativ zum Mahlkegel und des Werkzeugs bei einer allfälligen Herstellung des Mahlkegels ab der Stange gepunktet angedeutet ist.

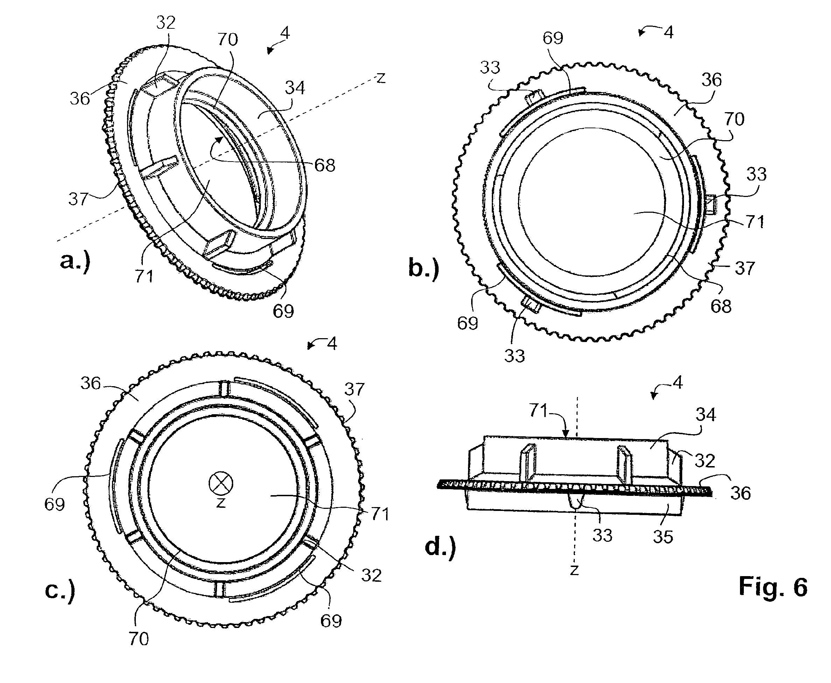

- Fig. 6: vier Ansichten des Verstellrings gemäss eines ersten Ausführungsbeispiels der vorliegenden Erfindung; wobei Fig. 6a eine perspektivische Ansicht des Verstellrings ist, Fig. 6b eine Ansicht von unten und Fig. 6c eine Ansicht von oben auf den Verstellring, und Fig. 6d eine seitliche Ansicht des Verstellrings zeigt.

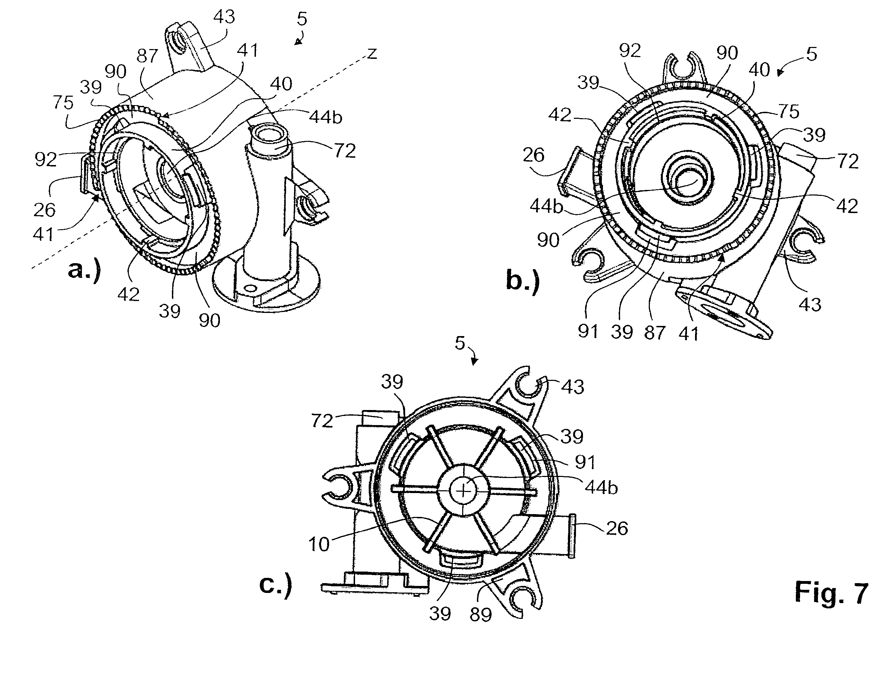

- Fig. 7: drei Ansichten des Mahlwerkgehäuses; wobei in Fig. 7a das Gehäuse in einer perspektivischen Ansicht von der Seite, in Fig. 7b in einer perspektivischen Ansicht von oben und in Fig. 7c das Gehäuse von unten dargestellt ist.

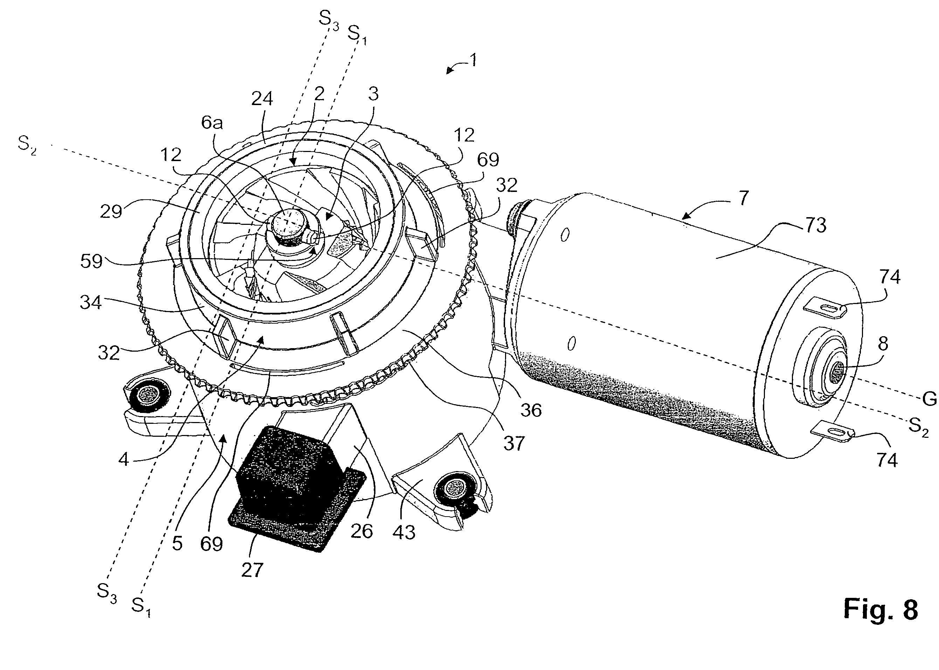

- Fig. 8: eine perspektivische Ansicht eines erfindungsgemässen Mahlwerkzeugs mit Antriebsmotor;

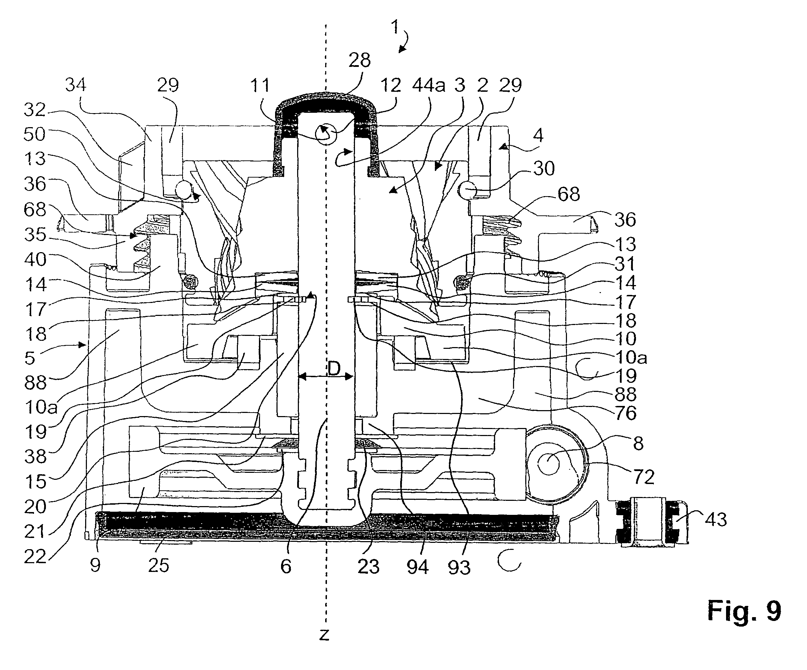

- Fig. 9: einen mittigen axialen Schnitt durch das Mahlwerkzeug von Fig. 8 entlang der in Fig. 8 bezeichneten Schnittlinie S1; und

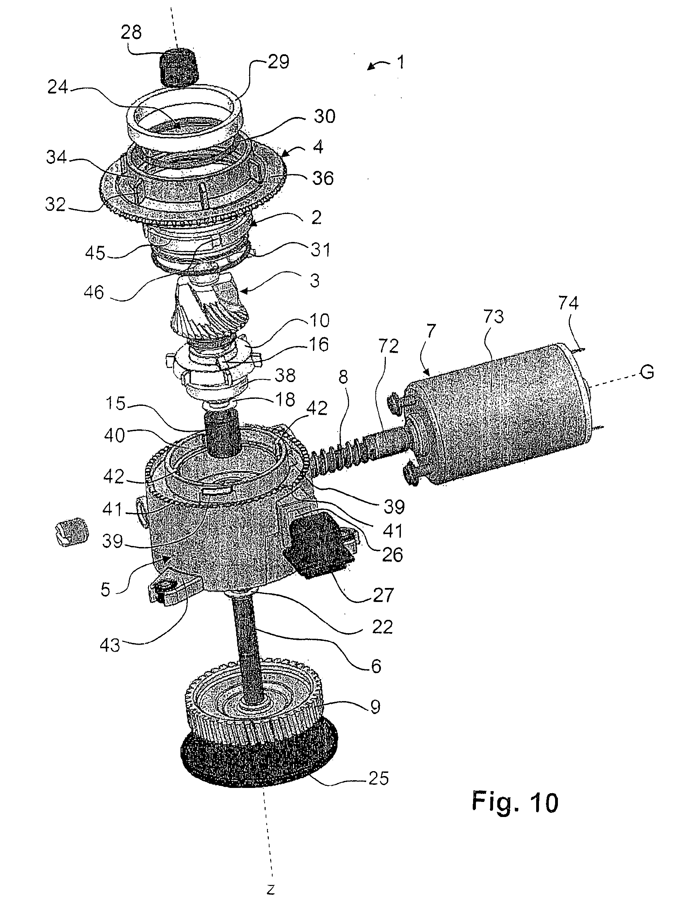

- Fig. 10: eine perspektivische Explosionsansicht eines erfindungsgemässen Mahlwerkzeugs.

### WEGE ZUR AUSFÜHRUNG DER ERFINDUNG

In der Folge sollen Ausführungsbeispiele zur Illustration der oben beschriebenen Erfindung dargestellt werden. Es ist dabei hervorzuheben, dass diese Ausführungsbeispiele zur Erläuterung und zur Dokumentation der Durchführbarkeit der Erfindung hinzugezogen werden sollen, nicht aber zur Einschränkung des generellen Erfindungsgedankens, wie er in den angehängten Ansprüchen definiert ist. Änderungen und Variationen des Ausführungsbeispiels, wie es in der Folge diskutiert wird, sind dem Fachmann zugänglich und ebenfalls von den Ansprüchen umfasst.

In Fig. 2a ist der Mahlring in seiner Rohlings-Form 2a abgebildet. Er weist also noch keine Zahnung auf. Der Mahlring-Rohling 2a ist im Wesentlichen ein zylindrischer Körper mit einer Durchgangsbohrung 44a und einem umlaufenden Steg. 45. An seiner Innenseite weist der Rohling 2a zwei gegenläufige, konische Flächen 66, 67 auf, welche an einer Mittelkante 53 zusammentreffen. Die beiden konischen Flächen verjüngen sich zur Mittelkante 53 hin. Die zur Feinzahnung 48 bestimmte Fläche 66 und die zur Grobzahnung 47 bestimmte Fläche 67 laufen also an der Mittelkante 53 wie zwei aufeinander zulaufende Kegel zusammen. Der Winkel γ zwischen der Z-Achse Hauptachse des Mahlrings und der zur Feinzahnung 48 vorbestimmten Innenfläche 66 beträgt im abgebildeten Ausführungsbeispiel ca. 14 Grad. Der Winkel γ beträgt in der Regel ca. 10-20 Grad, bevorzugt 12-18 Grad, insbesondere bevorzugt 14-16 Grad. Der Winkel δ zwischen Z-Achse und der zur Grobzahnung 47 vorbestimmten Innenfläche 67 beträgt im abgebildeten Ausführungsbeispiel ca. 22 Grad. Der Winkel δ beträgt in der Regel 15-30 Grad, bevorzugt 20-25 Grad, insbesondere bevorzugt 21-23 Grad.

In Fig. 2b ist ein Werkzeug 61a (Scheibenfräser) abgebildet, das gerade dabei ist, das Fräsen der Feinzahnung 48 zu beenden. Um die Feinzahnung 48 im Mahlring 2 zu fräsen, wird das Werkzeug 61a maschinell und vorzugsweise automatisiert an seinem Halterungshals 62 gehalten, während seine Scheibe 63 die Fräsung des Mahlring-Rohlings 2a vornimmt. Die Feinzahnung 48 wird mit einem Drehfräser 61 a, bevorzugt einem Nutenfräser/Scheibenfräser bearbeitet. Der Schliffwinkel ε des Nutenfräsers sollte auf ca. 10-25 Grad geschliffen sein, bevorzugt auf ca. 12-20 Grad, und insbesondere bevorzugt auf 15-17 Grad . Der Durchmesser R1 der Scheibe 63a ist bevorzugter Weise maximal gleich gross wie der Innendurchmesser M der ringförmigen Mittelkante 53. Der Fräser hat im hier gewählten Ausführungsbeispiel einen Durchmesser von 28 mm. Der Ring kann aber für grössere Mühlen auch grösser gemacht werden und dann kommt ein Fräser mit angepasstem Durchmesser zur Anwendung. Der Rand 64 der Scheibe 63a ist nach radial aussen hin, in Bezug auf den Radius der Werkzeugscheibe 63a, nach vorne hin (vom Halterungshals weg) konisch erweiternd ausgebildet. Der Schliffwinkel ε der Scheibe 63a des Nutenfräsers 61a beträgt im dargestellten Ausführungsbeispiel 15 Grad.

Zur Feinfräsung wird das Werkzeug 61 a, welches eine Werkzeugachse W aufweist, an den radial inneren Rand des Innenkegels des Mahlring-Rohlings 2a gesetzt, und zwar an die zur Feinzahnung 48 bestimmte Innenfläche 66 des Innenkegels. Die Werkzeugachse W ist bevorzugter Weise beim Ansetzen des Werkzeugs 61a an die besagte Innenfläche 66 bereits etwas seitlich versetzt von der zweiten Querrichtung Y, welche senkrecht zur Mahlwerkzeugachse Z verläuft, ausgerichtet. Dieser Versatz V₁ am Ende der Fräsbewegung (Einstich) beträgt im dargestellten Ausführungsbeispiel von Fig. 2b 2.2 mm, wobei dieser generell in einem Bereich von 1-3 mm, vorzugsweise ca. 1.5-2.8 mm liegen kann .

In Fig. 2c ist ein Schnitt durch die in Fig. 2b bezeichnete Achse C-C dargestellt. Dabei ist erkennbar, dass der Fräser bzw. das Werkzeug 61 a in eine, nebst dem in Fig. 2b dargestellten seitlichen Versatz auch zur Z-Achse radial vorzugsweise etwas versetzte Anstellposition gebracht wird. Anschliessend wird durch Einstechen im Wesentlichen radial oder senkrecht zur Ebene der zur Feinzahnung bestimmten Innenkegelfläche 66 die Feinzahnung erstellt. Das Einstechen kann auch in einer Richtung mit einer senkrechten und einer radialen Komponente erfolgen. Der zweite Versatz V₂ ist definiert als radialer Versatz des Scheibenmittelpunktes im Schnittpunkt mit der Werkzeugachse und der parallel zur Längsachse Z angeordneten Längsrichtung Q, mit dem das Werkzeug die Anstellposition einnimmt. Dieser zweite Versatz V₂ beträgt im vorliegenden Ausführungsbeispiel von Fig. 2c 2 mm, wobei dieser generell in einem Bereich von ca. 1.7-2.8 mm liegen kann . Es erfolgt bevorzugter Weise, jedoch abhängig vom Scheibendurchmesser R2 (Durchmesser hier 28 mm, kann jedoch bei grösseren Ringen auch grösser sein) und Mahlringhöhe H, keine tangentiale Bewegung des Werkzeugs 61 a.. Der Anstellwinkel β des Fräsers 61a beträgt in dem vorliegenden Ausführungsbeispiel 35 Grad und ist wichtig für das Entstehen einer kleinen Fläche 60 am Auslauf der Feinzahnung 48 an der Unterkante 80 des Mahlrings 2. Der Anstellwinkel β des Fräsers 61 kann aber bei anderen Mahlringgrössen und Werkzeuggrössen auch grösser oder kleiner sein, in der Regel ca. 20-45 Grad, vorzugsweise 25-35 Grad, insbesondere bevorzugt 30-35 Grad. Auf diese Weise können aus dem Rohling 2a die Zahnkerben der Feinzahnung 47 mit spitz zur Unterkante 80 des Mahlrings 2 zulaufenden Kanten ausgefräst werden.

Im vorliegenden Ausführungsbeispiel wird die Feinzahnung 48 vor der Grobzahnung 47 gefräst, was aber durchaus auch umgekehrt der Fall sein kann.

In Figur 1 ist ein fertig gefräster Mahlring 2 gemäss einer ersten Ausführungsform der Erfindung dargestellt. Durch die in der Grobzahnung 47 stehenbleibenden Zahnvorsprünge 52 lässt sich die ursprüngliche Konusform im Inneren des Mahlring-Rohlings 2a noch erkennen. Der umlaufende Steg 45 des Mahlrings 2 weist an seiner Aussenseite mindestens eine, bevorzugter Weise 1-6, insbesondere bevorzugt 4 Axialnuten 46 auf.. In dem in Fig. 1 dargestellten Ausführungsbeispiel weist der umlaufende Steg 45 vier Axialnuten 46 auf, wobei diese in regelmässigen Abständen entlang dem Stegumfang angeordnet sind, d.h. es liegen sich jeweils zwei Axialnuten 46 in radialer Richtung gegenüber. Der Mahlring 2 weist eine Innenfläche auf, welche in eine untere fein gezahnte Innenfläche 48 und eine obere grob gezahnte Innenfläche 47 aufgeteilt ist. Dazwischen befindet sich eine Mittelkante 53, welche nach radial innen ragt.

Somit beträgt der Innendurchmesser M des Mahlrings 2 an der Mittelkante 53 weniger als der Durchmesser O an seiner Oberkante 79 oder der Durchmesser U an seiner Unterkante 80.

Die Grobzahnung 47 besteht aus 6-14 in konzentrischer Ringanordnung entlang dem Innenumfang des Mahlrings 2 angeordnete Zahnkerben 51, bevorzugt 8-12, insbesondere bevorzugt 10 Zahnkerben 51, wobei jeweils zwischen zwei Zahnkerben 51 ein Zahnvorsprung 52 angeordnet ist. In dem in Fig. 1 dargestellten Ausführungsbeispiel weist der Mahlring 2 10 Zahnkerben und 10 Zahnvorsprünge auf. Bevorzugt ist, wenn die Zahnkerbe 51 ohne einen radialen Absatz 82 in den Zahnvorsprung 52 übergeht. Dies bezweckt, dass eine Kaffeebohne, welche beim Mahlvorgang in eine Zahnkerbe 51 gerät, optimal wieder auf einen Zahnvorsprung 52 und somit zwischen Mahlring 2 und Mahlkegel 3 in den Mahlspalt gerät.
In Fig. 1a ist erkennbar, dass die Zahnvorsprünge 52 der Grobzahnung 47 an der Oberkante 79 des Mahlrings 2 eine grössere radiale Breite aufweisen, welche an der tiefsten Stelle der benachbarten Zahnkerbe 51 nach radial aussen ausläuft. Die Zahnkerben 51 laufen somit an ihrer tiefsten Stelle an der Oberkante 79 des Mahlrings jeweils in eine Spitze 81. Die Zahnkerben 51 verlaufen gedreht zur Längsachse Z des Mahlrings 2 bzw. des Mahlwerks 1. Die Zahnkerben 51 der Grobzahnung verlaufen von der Oberkante 79 des Mahlrings 2 bis zur Mittelkante 53 des Mahlrings. Dort treffen Grobzahnung 47 und Feinzahnung 48 aufeinander und greifen teilweise ineinander ein.

Die Zahnvorsprünge 52 haben im Wesentlichen eine dreieckige Form und laufen zur Mittelkante 53 hin spitz zu.

Die Feinzahnung 48 weist schmalere Zahnvorsprünge und Zahnkerben auf als die Grobzahnung 47. Innerhalb einer Strecke in Umfangsrichtung, die derjenigen entspricht, die von einer Zahnkerbe der Grobzahnung eingenommen wird, finden ca. 3-6, bevorzugt 4-5 Zahnkerben der Feinzahnung 48 Platz. Die Feinzahnung 48 beginnt an der Unterkante 80 des Mahlrings und erstreckt sich in axialer Richtung bis zur Mittelkante 53. Bevorzugter Weise nimmt die Grobzahnung 47 des Mahlrings 2 in axialer Richtung mehr Höhe F1 ein als die Feinzahnung 48 mit Ihrer Höhe F2 (siehe Fig. 2). Der Mahlring 2 hat an seiner Oberkante 79 einen Innendurchmesser D1 von ca. 37 mm, generell ca. 30-43 mm, vorzugsweise ca. 35-40 mm, insbesondere bevorzugt ca. 36-38 mm und an seiner Unterkante 80 einen Innendurchmesser D2 von ca. 32 mm, vorzugsweise ca. 25-38 mm, insbesondere bevorzugt von ca. 30-34 mm, wobei vorzugsweise der Innendurchmesser D1 an der Oberkante 79 grösser ist als der Innendurchmesser D2 an der Unterkante.

Die Höhe F2 von der Unterkante 80 des Mahlrings 2 bis zur Mittelkante 53 beträgt ca. 7.5-9 mm, vorzugsweise ca. 8-8.5 mm, insbesondere bevorzugt 8.3-8.4 mm. Der Durchmesser M an der Mittelkante 53 beträgt ca. 26-31 mm, vorzugsweise 38-30 mm ..Bei einem Mahlring 2 gemäss der Figuren 1-3, der bei einer Gesamthöhe H von ca. 20 mm, an seiner Oberkante 79 einen Innendurchmesser D1 von 37 mm aufweist, und an seiner Unterkante 80 einen Innendurchmesser D2 von 31.8 mm aufweist, beträgt die Höhe F2 8.4 mm. Die Höhe F2 ist u.a. wichtig für die Effizienz des Mahlwerkzeugs 1, da ein ganz bestimmter umlaufender Flächenbereich am Mahlkegel 3 an der Mittelkante 53 des Mahlrings 2 entlang läuft, wenn das Mahlwerkzeug in Betrieb ist, d.h. die Kaffeebohnen werden an dieser durch die Höhe F2 bestimmten Position zwischen Mittelkante 53 und Mahlkegel 3 durch eine umlaufende Engstelle getrieben und somit gemahlen.

Für die in Figur 3 schematisch dargestellte Bearbeitung der zur Grobzahnung 47 bestimmten Fläche 67 des Innenkegels (siehe Fig.2a) wird der nun teilweise fein gezahnte Mahlring gedreht. Die Grobfräsung erfolgt ebenfalls mit einem Drehfräser 61b (Scheibenfräser), vorzugsweise mit einem Nutenfräser, der im dargestellten Ausführungsbeispiel auf einen Schliffwinkel µ von 30 Grad geschliffen ist. Im Gegensatz zum Nutenfräser 61a für die Feinzahnung 48 ist der Rand der Scheibe 63b des Nutenfräsers 61b für die Grobzahnung 47 hier nicht nach vorne hin konisch erweiternd, sondern nach vorne hin konisch verjüngend ausgebildet. Der Schliffwinkel µ sollte ca. 20-40 Grad betragen, bevorzugt auf 25-35 Grad, und insbesondere bevorzugt 28-32 Grad . Dieser Scheibenfräser wird in die Startposition P1 gebracht, welche in Fig. 3a-c dargestellt ist. Dann wird das Werkzeug 61b entlang der konischen Innenfläche 67 bis zur Endposition P2 gefahren. Der vom Nutenfräser 61b durchlaufene Weg von der Anfangsposition P1 zur Endposition P2 verläuft bei der Fräsung einer Zahnkerbe 51 entlang der in Fig. 3b bezeichneten Kreisbahn 85, bei stets paralleler Achsenrichtung W.

Dabei ist es von Vorteil, wenn der Winkel der Fräsbahn etwas spitzer ist als der Winkel δ der vorgedrehten Fläche 67, in dem dargestellten Ausführungsbeispiel also weniger als 22 Grad. Mit anderen Worten werden die Kanten am Scheibenrand 64 des Werkzeugs 61b nicht parallel zur Innenfläche des ursprünglichen Konus', sondern entlang einer kreisförmigen Linie 85 in den Mahlring-Rohling 2a getrieben. Würde der Fräser einfach der Ebene der Innenkegelfläche 67 entlangfahren, würde sich keine Kreisbahn 85 ergeben, sondern im Wesentlichen eine Linie 85a, wie in Fig. 3b bezeichnet. Wird die Fräsbahn aber gewissermassen nach unten hin, d.h. in Richtung der Feinzahnung 48, stärker in die Innenwände des Innenkegels hinein gefahren, werden die Zahnkerben 51 weiter unten, d.h. zur Mittelkante 53 hin etwas tiefer und es wird kanalisiert respektive Raum freigeben für den Durchlass der Kaffeebohnen.

Der Anstellwinkel θ des Fräsers 61b beträgt in dem vorliegenden Ausführungsbeispiel 50 Grad. Der Anstellwinkel θ des Fräsers 61 kann aber bei anderen Mahlringgrössen und Werkzeuggrössen auch grösser oder kleiner sein, in der Regel ca. 30 - 70Grad, vorzugsweise 40 - 60 Grad, insbesondere bevorzugt 45 - 50 Grad Die Zahnkerben 51 der Grobzahnung 47 sind somit an der Oberkante 79 des Mahlrings 2 weniger tief als unten, d.h. beim Übergang in die Feinzahnung 48 im Bereich der Mittelkante 53. Die Vertiefung der Zahnkerben 51 der Grobzahnung 47 nimmt sozusagen sukzessive von oben nach unten zu. Bevorzugt sind eine Anzahl von ca. 8-12 Zahnkerben 51, bevorzugt 10 Zahnkerben 51 .

Die Flächen des Rohlings 2a werden beim Fräsen der zur Grobzahnung 47 bestimmten Innenfläche 67 und der zur Feinzahnung 48 bestimmten Innenfläche 66 bevorzugt vollumfänglich bearbeitet. Die Fräserscheibe 63b sollte insofern breit genug sein, damit sich die Frässpuren überschneiden oder gerade berühren. Dies hat zur Folge, dass möglichst keine radialen Absätze 82 entstehen, was, wie bereits oben beschrieben, erstrebenswert ist.
In der Folge wird der Fräsvorgang für die Feinzahnung 48 und die Grobzahnung 47 des Mahlrings 2 spezifisch für das in Fig. 1-3 dargestellte Ausführungsbeispiel zusammengefasst. Der Mahlring 2 wird auf der Produktionsmaschine in folgenden Schritten komplett fertig bearbeitet:
1. Der Rohling 2a gemäss Fig. 2a wird gedreht (Drehbank, Drehfräser).
2. Die Feinverzahnung wird mit einem auf 15 Grad geschliffenen Nutenfräser bearbeitet. Dabei wird der Fräser in Position gebracht und durch Einstechen die Feinverzahnung 48 erstellt. Hier erfolgt keine tangentiale Bewegung. Die Form dieser Verzahnung ist, abgesehen von der unterschiedlichen Dimension, ähnlich derjenigen des Mahlkegels 3. Der Anstellwinkel β des Fräsers 61a von 35 Grad ist dabei wichtig für das Entstehen der kleinen Fläche am Auslauf der Verzahnung.
3. Nun wird der Mahlring 2 auch von der X-Richtung übernommen und die Grobverzahnung 47 bearbeitet. Dies erfolgt ebenfalls mit einem nun auf 30 Grad geschliffenen Nutenfräser. Dieser wird in die Startposition P1 gebracht und in einem bestimmten Winkel entlang der vorbearbeiteten konischen Fläche (Rohling 22 Grad) bis zur Endposition P2 gefahren. Gleichzeitig wird das Teil mit der X-Richtung entsprechend der Steigung gedreht. Dabei ist wichtig, dass der Winkel der Fräsbahn etwas spitzer ist als die 22 Grad der vorgedrehten Fläche, so dass die Nuten weiter unten etwas tiefer werden und Raum freigeben für den Durchlass des Kaffees. Die Flächen des Rohlings beim Fräsen werden im Bereich der Mittelkante 53 vollumfänglich überschnitten.
4. Abschliessend werden die Längsnuten am Aussendurchmesser gefräst. In Figur 4 sind vier verschiedene Ansichten des Mahlkegels 3 abgebildet. In Fig. 4a ist er von schräg oben perspektivisch dargestellt. Der Mahlkegel 3, welcher im Wesentlichen aus einem Körper 55 und einem Hals 54 besteht, weist eine in vertikaler Richtung entlang der Achse Z angeordnete Durchgangsbohrung 44a zur Aufnahme der Mühlenwelle 6 auf. Der kegelförmige Körper 55 des Mahlkegels 3 ist im unteren Bereich mit einer Feinzahnung 58 und im oberen Bereich in einer Grobzahnung 59 versehen. Im abgebildeten Ausführungsbeispiel besteht die Grobzahnung aus 4 Zahnvorsprüngen und 4 Zahnkerben. In der Regel sind 3-6 Zahnvorsprünge und entsprechend auch 3-6 Zahnkerben in der Grobzahnung 47 angeordnet. Die Feinzahnung weist wegen der kleineren Breite Ihrer Zahnkerben in Umfangsrichtung mehr Zahnkerben auf als die Grobzahnung 47.

Der Hals 54, welcher den oberen Teil der Bohrung 44a umschliesst, weist an seiner axialen Oberkante 77 mindestens eine Transversalnut 59 auf. In dem in Fig. 4 dargestellten Ausführungsbeispiel weist der Hals 54 in Umfangsrichtung des Halses 54 zwei einander gegenüberliegende Transversalnuten 59 auf, welche v-förmig ausgebildet sind. Die Form dieser Transversalnuten 59 kann beispielsweise auch u-förmig sein, wobei die v-förmige Ausbildung bevorzugt ist. Eine v-förmige Transversalnut 59 kann mit seinen Schenkeln bzw. Kulissen beispielsweise einen Winkel α von ca. 60-120 Grad, bevorzugt ca. 75-100 Grad, insbesondere bevorzugt ca. 90 Grad, wie auch in Figur 4 dargestellt, einschliessen bzw. bilden .
Eine Zahnkerbe der Grobzahnung 57 weist in Umfangsrichtung des Mahlkegels 3 eine Breite auf, welche der kumulativen Breite von 4-5 Zahnkerben der Feinzahnung 58 entspricht. Die Zahnkerben der Feinzahnung 58 laufen nach oben und nach unten hin spitz zu. Die Zahnkerben der Grobzahnung 57 laufen nach oben hin an der Unterkante des Halses 54 spitz zu und laufen unten in die Feinzahnung ein. Die Vorsprünge der Feinzahnung 58 haben ihren Ursprung in der Zahnkerbe oder Zahnvorsprung der Grobzahnung 57 und laufen mit einer spitzen Kante nach unten, wobei die Kante kurz vor der Unterkante des Mahlkegels 3 in eine kleine dreieck-artige Fläche 60 übergeht, d.h. diese kleine Fläche 60 bleibt ungefräst.

Sowohl die grobe als auch die feine Zahnkerbung des Mahlkegels ist im Verhältnis zum Aussenmantel des Mahlkegelrohlings 3a (siehe Fig. 5a) "gedreht" angeordnet. Das heisst, die Kerben verlaufen nicht einfach entlang der Aussenfläche des Mahlkegels 3 in einer geraden Linie von oben nach unten, sondern weisen gewissermassen eine geschwungene Form auf, welche in dem in Fig. 4 dargestellten Ausführungsbeispiel von links oben nach rechts unten verläuft.

In Figur 5a ist ein Mahlkegelrohling 3a dargestellt. Die nicht schraffierte Fläche weist auf die inneren Bohrungen hin, mit denen der Mahlkegel 3 vor der Fräsung der Grobzahnung 57 und Feinzahnung 58 versehen wird. Die konische Form wird zunächst angedreht.

Die Grobzahnung 47 wird mit einem Drehfräser 61c, vorzugsweise einem Fingerfräser mit einem bestimmten Durchmesser R3 um einen fiktiven Drehpunkt T rotierend gefräst (siehe Fig. 5b) Der Fingerfräser hat im hier angegebenen Ausführungsbeispiel einen Durchmesser von 12 mm. Der Durchmesser der fiktiven Kreisbahn K um den fiktiven Mittel- bzw. Drehpunkt T, entlang welcher der Fingerfräser verläuft, beträgt im dargestellten Ausführungsbeispiel 41 mm, wobei der Durchmesser R5 ca. 30-50 mm, vorzugsweise 35-45, insbesondere bevorzugt 38-42, am meisten bevorzugt 41 mm betragen kann. Je grösser der Durchmesser R5, desto flacher die Krümmung des Kerbenverlaufs, je kleiner der Durchmesser, desto stärker die Krümmung des Kerbenverlaufs. Der Fingerfräser 61 c gemäss dem in Fig. 5b dargestellten Ausführungsbeispiel weist einen Durchmesser von 12 mm auf. Der Durchmesser des Fingerfräsers 61c kann, je nach Grösse des Mahlkegels 3 und der gewünschten Zahnkerbengrösse 8-16 mm, bevorzugt 10-14 mm, insbesondere bevorzugt 11.5-12.5 mm betragen .Diese Fräsung könnte aber unter Umständen auch mit einem grösseren Scheibenfräser ausgeführt werden, was die Maschine jedoch unnötig belastet und den Fräsvorgang auch nicht beschleunigt.

In Fig. 5c ist die Feinzahnungs-Fräsung am Mahlring-Rohling 3a dargestellt. Diese wird mit einem Drehfräser, bevorzugt einem Scheibenfräser gemäss dem dargestellten Ausführungsbeispiel durchgeführt. Dabei werden die Zahnkerben der Feinverzahnung durch alleiniges Einstechen des Scheibenfräsers in den Mahlkegel-Rohling 3a eingefräst. Die in Fig. 5c dargestellte Scheibe hat einen Durchmesser von ca. 50mm, wobei Durchmesser von 40-60 mm denkbar sind, bevorzugt 50-56 mm, insbesondere bevorzugt 50-52 mm Dabei erfolgt vorzugsweise keine tangentiale Bewegung. Die Feinzahnung 58 weist vorzugsweise rein konkave Vertiefungen auf, welche durch ihre Position, den Fräserdurchmesser R4, den Anstellwinkel π (ca. 10 Grad) und die Einstichtiefe bestimmt werden. Durch das Einstechen des Fräsers 61d ohne jegliche tangentiale Bewegung entstehen auch die erwünschten oben erwähnten ungefrästen kleinen Flächen 60 am untersten Randabschnitt der Aussenfläche des Mahlkegels 3.

In Fig. 5c ist ausserdem oberhalb des Mahlkegels 3a der Folgekegel 78 mit gestrichelter Linie dargestellt. Der Mahlkegel 3 kann somit ab der Stange hergestellt werden. Der Abstand der Mahlkegel-Rohlinge 3a bzw. der Abstand zwischen einem fertig gefrästen Mahlkegel 3 und einem Folgekegel 78 auf der Produktionsmaschine ist abhängig von dem anzuwendenden Scheibendurchmesser R4 des Fräsers 61 d (oder umgekehrt), welcher wiederum abhängig ist von der Länge und Tiefe bzw. der Form der gewünschten Kerbung .
In der Folge wird der Fräsvorgang für die Feinzahnung 58 und die Grobzahnung 57 des Mahlkegels 3 spezifisch für das in Fig. 5 dargestellte Ausführungsbeispiel zusammengefasst. Der Mahlkegel wird ab Stange in folgenden Schritten gefertigt:
1. Die konische Form gemäss dem Rohling 3a in Fig. 5a wird angedreht.
2. Die Grobverzahnung wird mit einem Fingerfräser mit Durchmesser 12 mm um einen fiktiven Drehpunkt rotierend gefräst (siehe Fig. 5b). Diese könnte auch mit einem entsprechend grossen Scheibenfräser gemacht werden, was aber die Maschine zu sehr belastet und nicht schneller ist.
3. Die Feinverzahnung wird mit einem Scheibenfräser gemäss Fig. 5c nur durch Einstechen auf ein bestimmtes Mass hergestellt. Es erfolgt dabei keine tangentiale Bewegung. Die Feinverzahnung ist somit eine reine konkave Vertiefung, welche durch ihre Position, Fräserdurchmesser R4, Anstellwinkel π und die Einstichtiefe bestimmt wird. Dadurch entsteht auch die kleine Fläche am Durchmesser an der Unterkante 86 des Mahlkegels 3,.
4. Nun wird das Teil durch die X-Richtung am Zapfen mit Durchmesser 12.5 mm übernommen und die Gegenseite bearbeitet.

Dieses spezifische Verfahren zur Herstellung des Mahlkegels ist im Prinzip unabhängig zum oben beschriebenen Verfahren zur Herstellung des Mahlrings, und es ist auch für sich allein betrachtet eine neue und erfinderische Entwicklung.

In Figur 6 sind vier Ansichten des Verstellrings 4 dargestellt. Der Verstellring 4 ist vorzugsweise aus dem gleichen Material geformt wie das Gehäuse 5. Vorzugsweise ist das Material Kunststoff (bitte verifizieren). Bei dem in Fig. 6 dargestellten bevorzugten Ausführungsbeispiel ist der Verstellring 4 einstückig geformt.

Der Verstellring 4 weist einen oberen ersten zylindrischen Verstellringabschnitt 34 und einen unteren zweiten zylindrischen Verstellringabschnitt 35 auf. Die beiden Verstellringabschnitte 34, 35 werden von einem umlaufenden Flansch 36 voneinander getrennt. Der Verstellring 4 weist eine zentrale Ausnehmung zur koaxialen Aufnahme des Mahlrings 2 in Bezug auf die Mahlwerk-Längsachse Z auf. An der Aussenseite des oberen Verstellringabschnittes 34 sind, vorzugsweise in regelmässigen Abständen zueinander, Flügel 32 angeordnet. Diese weisen nach radial aussen und erstrecken sich radial vorzugsweise über nicht mehr als die Hälfte der Breite des umlaufenden Flansches 36. Etwa in der Mitte der Breite des umlaufenden Flansches 36 sind in Umfangsrichtung drei schlitzartige Ausnehmungen 69 angeordnet, wobei sich jede Ausnehmung 69 über ein zwischen zwei Flügeln 32 liegendes Kreissegment erstreckt. An der Unterseite des umlaufenden Flansches 36 ist, jeweils radial ausserhalb einer schlitzartigen Ausnehmung 69 und etwa in der Mitte des durch die Ausnehmung 69 abgedeckten Kreissegments, eine nach unten, zum unteren Verstellringabschnitt 35 weisende Rippe 33 angeordnet. Vorzugsweise sind an der Flanschunterseite gleich viele Rippen 33 wie Ausnehmungen 69 vorhanden. Die axiale Länge einer Rippe 33 ist vorzugsweise kürzer als die Länge des unteren Verstellringabschnittes 35 Der untere Verstellringabschnitt weist an seiner Innenseite ein Innengewinde 68 auf. Mit Hilfe des Innengewindes 68 kann der Verstellring 4 am Gehäuse 5 befestigt und mittels Schraubbewegung der Mahlgrad eingestellt werden, indem die Position des im Verstellring 4 verankerten Mahlrings 2 in Bezug auf den im Gehäuse 5 verankerten Mahlkegels 3 variiert wird. Der obere Verstellringabschnitt 34 weist an seiner Innenseite eine umlaufende Schulter 70 auf, die zur Anlage des von oben in die umlaufende Nut 50 des Mahlrings 2 eingesetzten Federstahlrings 30 geeignet ist. Gleichzeitig dient die Schulter 70 als oberer Anschlag für den umlaufenden Steg 45 des Mahlrings 2. Ein Filzring 29 ist an die Innenseite des oberen Verstellringabschnittes einlegbar, findet auf der eben erwähnten umlaufenden Schulter 70 einen unteren Anschlag und kommt zwischen dem oberen Rand des Mahlrings 2 und der Innenseite des oberen Verstellringabschnittes 34 zu liegen. Dieser Filzring 29 verhindert, dass Kaffee zwischen den Mahlring 2 und den Verstellring 4 gelangt.

In Figur 7 ist ein Mahlwerkzeug-Gehäuse 5 nach einer bevorzugten Ausführungsform der vorliegenden Erfindung in drei verschiedenen Ansichten dargestellt. Das Gehäuse 5 weist einen Innengehäuseabschnitt 40 und ein zylindrisches Aussengehäuse 87 auf, zwischen denen sich ein Hohlraum (siehe Fig. 9) befindet. Des Weiteren grenzt an das Aussengehäuse 87, vorzugsweise einstückig daran angeformt, ein Schneckenwellenlager 72. Ebenfalls vorzugsweise am Aussengehäuse 87 angeformt ist ein Auswurf 26 für den gemahlenen Kaffee. Dieser Auswurf erstreckt sich als hohler Gang durch den Hohlraum 88 zwischen dem Aussengehäuse 87 dem Innengehäuseabschnitt 40 und weist sowohl nach innen zum Mahlraum hin, als auch nach aussen hin eine Öffnung auf. Gegebenenfalls kann dieser Auswurf nach aussen hin durch das Aufsetzen eines Schutzdeckels 27 bzw. einer Umlenkkappe abgedeckt werden.

Der Innengehäuseabschnitt 40 und das Aussengehäuse 87 sind durch einen einstückig mit den beiden Gehäuse-Elementen 40, 87 ausgebildeten Kranz 90 verbunden. Der Verstellring 4 lässt sich in aufgesetztem Zustand entlang einem Kreissegment-Bereich, der dem Abstand zwischen zwei Absätzen 41 entspricht, am Gehäuse 5 verstellen. Somit lässt sich der Mahlgrad in dem mit drei Absätzen 41 bzw. drei Rippen 33 ausgestalteten und in Fig. 7 dargestellten Ausführungsbeispiel um einen Winkel von ca. 120 Grad im Uhrzeigersinn verstellen bis die Rippe 33 am Anschlag 41 steht. An der Anschlagsposition ist der feinst-mögliche Mahlgrad erreicht, da sich der Mahlring 2 in seiner tiefst möglichen Position in Bezug auf den Mahlkegel 3 befindet. Der Mahlspalt (nicht dargestellt) ist in dieser Position am kleinsten. Dreht man entgegen dem Uhrzeigersinn, verlässt die Rippe nach einem Drehbereich von ca. 120 Grad die Oberkantenrippung 75 beim nächsten in Umfangsrichtung im Gegenuhrzeigersinn angeordneten Absatz 41. Das Innengewinde 68 des Verstellrings 4 ist so ausgebildet, dass es geeignet ist, in Aussengewindeabschnitte 39 an der umfangsseitigen Aussenfläche des Innengehäuseabschnittes 40 einzugreifen. In dem dargestellten Ausführungsbeispiel sind in regelmässigen Abständen in Umfangsrichtung drei solche Aussengewindeabschnitte 39 angeordnet. Unterhalb jedem Aussengewindeabschnitt 39 sind im Kranz 90 Aussparungen angeordnet.

An der Innenseite des Innengehäuseabschnittes 40 sind, nach radial innen weisend, in regelmässigen Abständen in Umfangsrichtung Axialrippen 42 angeordnet, welche sich von der Oberkante des Innengehäuseabschnittes 40 bis zu einem ebenfalls an der Innenseite des Innengehäuseabschnittes oberhalb des Kranzes 90 angeordneten umlaufenden Ringabsatz 91 erstrecken. In dem in Fig. 7 dargestellten Ausführungsbeispiel sind vier solche Axialrippen 42 angeordnet. Die Anzahl, Breite und Länge der Axialrippen 42 und deren Abstände voneinander entsprechen der Anzahl, Breite und Länge der Axialnuten 46 im umlaufenden Steg 45 des Mahlrings 2. Das Aufschrauben des Verstellrings 4 auf das Gehäuse 5 kann erst beginnen, wenn die Axialrippen 42 in die Axialnuten 46 des Mahlrings 2 eingreifen. Dadurch wird die Position des Mahlrings 2 rotationsfixiert, und der Verstellring 4 dreht vom Moment des Eingreifens der Axialrippen 42 in die Axialnuten 46 alleine weiter. Durch diese Bewegung wird die axiale Position des Mahlrings 2 gegenüber dem feststehenden Mahlkegel 3 verschoben. Die Grenzen für diese axiale Bewegung des Mahlrings 2 liegen innerhalb der Länge der Axialnuten 46 bzw. der Axialrippen 42. Die Mahlgradverstellung ist nur solange möglich solange sich mindestens ein Aussengewindeabschnitt 39 im Eingriff mit dem Innengewinde 68 befindet.

Im Stand der Technik ist der Mahlring 2 fix, und nicht drehbar wie in der vorliegenden Erfindung, im Verstellring gehalten, was zur Folge hat, dass das Drehmoment, das beim Mahlvorgang wirkt, wenigstens teilweise über den Mahlring 2 auf den Verstellring 4 und dessen Rasterung übertragen wird. In der vorliegenden Erfindung ist der Mahlring 2 so ausgestaltet, dass Axialrippen 42 im fixen Gehäuse 5 in Axialnuten 46, welche umfangsseitig im umlaufenden Steg des Mahlrings 2 angeordnet sind, eingreifen können. Auf diese Weise wird das Drehmoment vom Mahlring 2 über das Gehäuse aufgenommen. Somit ist der Mahlgrad über die axiale Verschiebung des Mahlrings 2, welcher drehbeweglich im Verstellring 4 montiert ist, am Verstellring 4 einstellbar. Diese Halterung des Mahlrings im Verstellring ist für sich allein betrachtet und unabhängig vom im Moment beanspruchten Verfahren neu und erfinderisch.

Des Weiteren ist in Fig. 7c, in welchem das Gehäuse 5 von unten dargestellt ist, die Unterseite eines Flügelrads 10 zu erkennen. Dieses hat die Funktion, gemahlenen Kaffee zu sammeln und in einer Rotationsbewegung in Richtung des Auswurfs 26 zu schieben, wo der gemahlene Kaffee austreten kann. Das Antriebswellenlager 72, welches vorzugsweise ebenfalls aus dem gleichen Material hergestellt ist wie das Gehäuse 5, ist vorzugsweise und gemäss dem in Fig. 7 dargestellten Ausführungsbeispiel tangential in Bezug auf den zylindrischen Kreisumfang des Gehäuses 5 angeordnet.

In Figur 8 ist eine perspektivische Ansicht eines Mahlwerks 1 gemäss einem bevorzugten Ausführungsbeispiel angeordnet. Rechts in der Figur ist das Antriebsgehäuse 73 dargestellt, in welchem sich der Antrieb 7 befindet. Das Antriebsgehäuse 73 bzw. die Motorenwelle 8, welche vorzugsweise eine Schneckenwelle ist, haben eine Ausdehnung entlang der Achse G. An der Rückwand des Antriebsgehäuses 73 sind Kontakte 74 für einen Stromanschluss oder für allfälligen Batteriebetrieb angeordnet.

In Figur 9 ist ein mittiger axialer Schnitt durch das Mahlwerkzeug 1 von Fig. 8 durch die in Fig. 8 bezeichnete Schnittlinie S 1 dargestellt. Die Schnittlinie S1 verläuft senkrecht zum Querstift 12 und teilt die Mühlenwelle 6, den Mahlkegel 3, den Mahlring 2, den Verstellring 4 und das Gehäuse 5 in zwei im Wesentlichen gleich grosse Hälften. Der Schnitt durch die Linie S1 verläuft auch quer zur Antriebswelle 8.

Die Mühlenwelle 6 mit ihrem Durchmesser D verläuft zentral und axial entlang der Längsachse Z durch das gesamte Mahlwerkzeug 1 und ist im Antriebsrad 9, welches vorzugsweise ein Schneckenrad ist, verankert. Der Antrieb 7 treibt über eine Motorenwelle 8, vorzugsweise eine Schneckenwelle, welche an ein gezahntes Antriebsrad 9, vorzugsweise ein Schneckenrad, gekoppelt ist, die Mühlenwelle 6, und somit auch den am oberen freien Ende 6a der Mühlenwelle 6 mit der Mühlenwelle 6 über eine Rutschkupplung bis zu einem bestimmten Drehmoment befestigten Mahlkegel 3 an.

Das Mahlwerkzeug 1 weist ein Gehäuse 5 und einen darauf aufschraubbaren Verstellring 4 auf. Das Gehäuse 5 und der Verstellring 4 bilden sozusagen die Umhüllenden der eigentlichen Mahlelemente, namentlich des Mahlkegels 3 und des Mahlrings 2. Während der Mahlkegel 3 im Gehäuse 5 verankert ist, wird der Mahlring 2 vom Verstellring 4 umschlossen und axial gehalten wobei der Mahlring 2 aber relativ zum Verstellring 4 drehbeweglich bleibt. Der Mahlkegel 3 ist im Mahlwerkzeug 1 in axialer Richtung spielfrei montiert, während der Mahlring 2 durch eine Schraubbewegung des Verstellrings 4 axial relativ zum Mahlkegel 3 verstellbar ist.

Der Mahlkegel 3 steht im Wesentlichen mit seiner Unterkante 86 auf einem Flügelrad 10 auf. Dazu weist der Mahlkegel 3, wie in Fig. 4b erkennbar, an seiner Unterkante 86 zwei einander gegenüberliegende Radialnuten 56 auf, in welche zwei einander gegenüberliegende Stege 16 an der Oberseite des Flügelrads 10 eingreifen können. In Ruheposition des Mahlwerkzeugs 1 und während des normalen Betriebs berührt das Flügelrad 10 den Zwischenboden 76 des Gehäuses 5 nicht. Es besteht also ein kleiner Spalt 93 unter den Flügeln 10a des Flügelrads 10. Oberhalb des Flügelrads 10, innerhalb des Körpers 55 des Mahlkegels 3 befinden sich zwei vorgespannte Tellerfedern 13,14, wobei die erste Tellerfeder 13 nach oben hin gewölbt ist und die zweite Tellerfeder 14 nach unten hin. Um entgegen der Federkraft diese beiden Tellerfedern 13,14 zusammenzupressen muss eine axiale Kraft aufgewendet werden.

Im oberen Bereich des Gleitlagers 15 ist zur Wellensicherung bzw. -halterung ein umlaufender Einstich 20 vorgesehen, in welchen ein Sicherungsring 19 bzw. eine Sicherungsscheibe, vorzugsweise ein sogenannter Seeger-Ring eingreift. Ober- und unterhalb des Sicherungsringes 19 ist eine erste Unterlagscheibe 17 und eine zweite Unterlagscheibe 18 angeordnet, welche verhindern, dass der Sicherungsring 19 auf dem Gleitlager 15 reibt und die axiale Lagerung der Mühlenwelle 6 durch eine Halterung am Gleitlager festlegt. Das Gleitlager 15 findet einen unteren Anschlag an einem umlaufenden Absatz 94 des Zwischenbodens 76, welcher nach unten hin von einer dritten Unterlagscheibe 21 begrenzt wird, gefolgt nach unten hin von einer Wellscheibe 23, einer weiteren, vierten Unterlagscheibe 22 und schliesslich der Nabe des Antriebsrades 9. Die Wellscheibenfederung hat nach unten einen fixen Anschlag, namentlich die vierte Unterlagsscheibe 22 und das darunter liegende Antriebsrad 9. Die vierte Unterlagsscheibe 22 weist in der Regel denselben Durchmesser auf wie die erste und zweite Unterlagsscheibe 17,18.
Wird statt einer Kaffeebohne ein Stein oder eine Kakaobohne, welche härter ist als eine Kaffeebohne, im Mahlspalt von der Zahnung zwischen Mahlkegel 3 und Mahlring 2 ergriffen, ergibt dies einen plötzlichen Schlag auf die Zähne des Antriebsrads und somit ein übermässiges Drehmoment. Um diese Zahnbelastung zu Verzögern, wurde die Rutschkupplung eingebaut, welche den Zweck hat, die auf das Antriebsrad 9 wirkende Kraft anstatt plötzlich nur langsam ansteigen zu lassen

Die Zahnflankenbelastung des Antriebsrades ist ausgerichtet auf ein bestimmtes Drehmoment. Ein Drehmoment von ca. 3 Nm ist beim Mahlvorgang üblich. Die Rutschkupplung löst im Falle eines erhöhten Drehmoments etwa bei 5 Nm aus.

Figur 10 zeigt eine Explosionsansicht des Mahlwerkzeugs 1 nach einem bevorzugten Ausführungsbeispiel der vorliegenden Erfindung, wobei eine perspektivische Ansicht dargestellt ist. Von unten kann auf das Gehäuse 5 eine Abdeckplatte 25 aufgesetzt werden, damit das Antriebsrad 9 geschützt ist.

Anhand von der Figur 10 wird in der Folge eine bevorzugte Montagereihenfolge beschrieben: Die Montage von unten nach oben gemäss dem in Fig. 10 dargestellten Ausführungsbeispiel erfolgt vorzugsweise so, dass auf eine vorgefertigte Einheit von Mühlenwelle 6 und an deren unteren Ende befestigtem Antriebsrad 9, vorzugsweise einem Schneckenrad, die vierte Unterlagscheibe 22, dann die Wellscheibe 23, und anschliessend die dritte Unterlagscheibe 21 aufgesetzt wird. Diese zusammengesetzten Elemente werden dann von unten in das Gehäuse 5 geschoben, in das bereits ein Gleitlager 15 eingeschoben oder eingepresst wurde, welches eine zentrale Durchgangsbohrung 44b für die Mühlenwelle 6 aufweist. An das Gehäuse lässt sich zusätzlich vor oder nach der Montage der Antriebsrad-Mühlenwelle-Einheit die Antriebswelle 8 und damit verbunden der Antrieb 7 mit seinem Gehäuse 73 montieren. Auf den nun aus der Oberseite des Gleitlagers herausragenden oberen Abschnitts der Mühlenwelle 6 wird dann die zweite Unterlagscheibe 18 aufgesetzt. Die Mühlenwelle 6 wird dann leicht nach unten gedrückt, sodass die Wellscheibe 23 etwas vorgespannt ist. Dann wird der Sicherungsring bzw. Seeger-Ring 19, welcher vorzugsweise aus Federstahl besteht, in den umlaufenden Einstich 20 in der Mühlenwelle 6 eingesetzt und an seiner Oberseite durch eine erste Unterlagscheibe 17 abgedeckt. An dieser Stelle wird ein Dichtungsring 38, falls nötig, und das Flügelrad 10 übergestülpt, deren Innendurchmesser grösser ist als der Durchmesser der ersten Unterlagscheibe 17. Dann wird die zweite Tellerfeder 14 wird mit nach oben offenem Teller und dann die erste Tellerfeder 13 mit nach unten offenem Teller auf die Mühlenwelle 6 aufgesetzt. Anschliessend wird der Mahlkegel 3 aufgesetzt. Nun wird der Querstift 12 in die Durchgangsbohrung 11 am freien oberen Ende der Mühlenwelle 6 durchgeführt, sodass die beiden Enden des Querstifts 12 in den beiden einander gegenüberliegenden Transversalnuten 59, die je einen Winkel α von ca. 90 Grad bilden, an der Oberkante 77 des Mahlkegelhalses 54 zu liegen kommen. Nach dieser Verbindung von Mühlenwelle 6 und Mahlkegel 3 wird der Mahlring 2 aufgesetzt, mitsamt einem in einer unteren umlaufenden Nut 49 des Mahlrings 2 eingesetzten O-Ring 31. Auf den Mahlring 2 wird der Verstellring 4 aufgesetzt, der mit seiner umlaufenden Schulter 70 einen unteren Anschlag am umlaufenden Steg 45 des Mahlrings 2 findet. Um den Mahlring 2 im Verstellring 4 axial zu befestigen wird ein Federstahlring 30 in die axiale umlaufende Nut 50 des Mahlrings 2 eingesetzt. Zuletzt wird ein Filzring 29 in den oberen Verstellringabschnitt 34 eingesetzt, allenfalls gefolgt von einer auf den Hals 54 des Mahlkegels 3 aufsetzbaren Schutzkappe 28.

Alternativ zur der dargestellten Ausbildung der Rutschkupplung mit Querstift 12, Transversalnuten 59 und Tellerfedern 13,14 kann die Rutschkupplung statt oberhalb des Halses 54 auch an einer Stelle der Mühlenwelle 6 angeordnet sein, die nicht über den Hals 54 der Mühlenwelle 6 hinausragt. Eine solche Rutschkupplung könnte beispielsweise eine mittels zwei ball- oder kugelähnlichen Elementen, welche mittels einer Feder miteinander verbunden sind, ausgestattete Sicherungsvorrichtung sein. Diese ballähnlichen Elemente könnten dann quer zur Längsachse Z des Mahlwerkzeugs 1 deplatzierbar sein, in eine umlaufende Nut hinein, wenn das Drehmoment einen für die Auslösung der Rutschkupplung ausreichenden Grad erreicht.

### BEZUGSZEICHENLISTE

- 1: Mahlwerk
- 2: Mahlring
- 2a: Mahlring-Rohling
- 3: Mahlkegel
- 3a: Mahlkegel-Rohling
- 4: Verstellring
- 5: Gehäuse
- 6: Mühlenwelle
- 6a: oberes bzw. freies Ende der Mühlenwelle
- 7: Antrieb mit Schneckengetriebe
- 8: Motorenwelle, Schneckenwelle
- 9: Antriebsrad, Schneckenrad
- 10: Flügelrad
- 10a: Flügel von 10
- 11: Durchstich, Querbohrung für 12
- 12: Befestigungsmittel, Querstift
- 13: erste Tellerfeder
- 14: zweite Tellerfeder
- 15: Gleitlager
- 16: Steg von 10
- 17: erste Unterlagscheibe
- 18: zweite Unterlagscheibe
- 19: Sicherungsring/-scheibe, Seeger-Ring
- 20: umlaufender Einstich in 6
- 21: dritte Unterlagscheibe
- 22: vierte Unterlagscheibe
- 23: Wellscheibe
- 24: Öffnung von 1
- 25: Abdeckplatte
- 26: Auswurf
- 27: Schutzdeckel bzw. Umlenkkappe von 26
- 28: Schutzkappe von 6 bzw. 24
- 29: Filzring
- 30: Federstahlring
- 31: Dichtungsring, O-Ring
- 32: Flügel an 4
- 33: Rippe
- 34: erster zylindrischer Verstellringabschnitt (oberer)
- 35: zweiter zylindrischer Verstellringabschnitt (unterer)
- 36: umlaufender Flansch
- 37: Flanschrippung/-zahnung
- 38: Ring
- 39: Aussengewindeabschnitt
- 40: zylindrisches Innengehäuseabschnitt
- 41: Absatz
- 42: Axialrippe
- 43: Befestigungsmittel
- 44a: Durchgangsbohrung für 6 in 3
- 44b: Bohrung für 6 in 15
- 45: umlaufender Steg von 2
- 46: Axialnut in 45
- 47: Ring-Grobzahnung
- 48: Ring-Feinzahnung
- 49: obere umlaufende Nut für 31 in 2
- 50: untere umlaufende Nut für 30 in 2
- 51: Zahnkerbe von 2
- 52: Zahnvorsprung von 2
- 53: Mittelkante zwischen 47 und 48
- 54: Kegelhals
- 55: Kegelkörper
- 56: Radialnut von 3
- 57: Kegel-Grobzahnung
- 58: Kegel-Feinzahnung
- 59: Transversalnut in 11
- 60: ungefräste Abschnitte von 3
- 61a: Werkzeug, Drehfräse für 48
- 61b: Werkzeug, Drehfräse für 47
- 61c: Werkzeug, Drehfräse für 57
- 61d: Werkzeug, Drehfräse für 58
- 62: Halterungshals von 61
- 63: Fräserscheibe
- 63a: Fräserscheibe von 61a
- 63b: Fräserscheibe von 61b
- 63c: Fräserscheibe von 61c
- 63d: Fräserscheibe von 61d
- 64: erweiternder Scheibenrand von 61 a
- 65: zulaufender Scheibenrand von 61b
- 66: zur Feinzahnung bestimmte Innenfläche von 2a
- 67: zur Grobzahnung bestimmte Innenfläche von 2a
- 68: Innengewinde von 4
- 69: Aussparung von 4
- 70: umlaufende Schulter an Innenseite von 4
- 71: zentrale Ausnehmung von 4
- 72: Antriebswellen-Lager
- 73: Antriebsgehäuse
- 74: Kontakte für Stromanschluss/Batteriebetrieb
- 75: Oberkantenrippung von 5
- 76: Zwischenboden von 5
- 77: Oberkante von 54
- 78: Folgekegel
- 79: Oberkante von 2
- 80: Unterkante von 2
- 81: Spitze von 51
- 82: Kante zwischen 51 und 52
- 83: Rand von 52 an 79
- 84: Ecke von 48 an 53
- 85: Bewegungsrichtung von 6 1 b für 48
- 85a: fiktive parallele Bewegungsrichtung von 61b
- 86: Unterkante von 3
- 87: zylindrisches Aussengehäuse 87
- 88: Hohlraum zwischen 40 und 87
- 89: Ausnehmung in 43
- 90: Kranz in 5
- 91: Aussparung in 90
- 92: umlaufender Ringabsatz von 40
- 93: Spalt zwischen 10 und 76
- 94: umlaufender Absatz in 76
- b1: Breite von 59
- t1: Tiefe von 59
- B-B: erste Schnittlinie durch 2
- C-C: zweite Schnittlinie durch 2
- D: Durchmesser von 6
- D1: Durchmesser an 79
- D2: Durchmesser an 80
- F1: Höhe von 47 in 2
- F2: Höhe von 48 in 2
- G: Getriebeachse
- H: axiale Höhe von 2
- K: fiktive Kreislinie beim Fräsen von 57 mit 61c
- M: Innendurchmesser von 2 bei 53
- O: Durchmesser von 2 an 79
- P1: Startposition von 61 für 47
- P2: Endposition von 61 für 47
- Q: Längsrichtung von 64
- R1: Durchmesser von 63a
- R2: Durchmesser von 63b
- R3: Durchmesser von 63c
- R4: Durchmesser von 63d
- R5: Durchmesser von K
- S1: erste Schnittlinie durch 1
- S2: zweite Schnittlinie durch 1
- S3: dritte Schnittlinie durch 1
- T: fiktiver Drehpunkt für 61c
- U: Durchmesser von 2 an 80
- W: Werkzeugachse
- X: erste Querrichtung von 2
- Y: zweite Querrichtung von 2
- Z: Längsachse des Mahlwerks
- V 1: erster Versatz
- V2: zweiter Versatz
- α: Winkel von 59
- β: Anstellwinkel von 61 a
- γ: Winkel von 66 in 2a
- δ: Winkel von 67 in 2a
- ε: Schliffwinkel von 61 a
- µ: Schliffwinkel von 61 b
- θ: Anstellwinkel für 61 b
- π: Anstellwinkel von 61 d

## Patentansprüche

1. Verfahren zur Herstellung der innenseitigen Zahnung (47, 48) eines Mahlrings (2) für ein Mahlwerk, insbesondere zur Zerkleinerung von körnigem Mahlgut wie Getreidekorn, Kaffee, Pfeffer, Salz oder Zucker, wobei der Mahlring (2) eine Durchgangsbohrung zur Aufnahme eines entsprechenden Mahlkegels (3) aufweist, und diese Durchgangsbohrung in Förderrichtung des Mahlguts im oberen Bereich (67) konisch zulaufend und im unteren Bereich (66) konisch erweiternd unter Ausbildung einer Mittelkante (53) ausgebildet ist,
**dadurch gekennzeichnet, dass**
ausgehend von einem Rohling mit flachen Kegelmantelinnenflächen die innenseitige Zahnung (47, 48) im oberen Bereich (67) und/oder im unteren Bereich (66) im wesentlichen ausschliesslich unter Zuhilfenahme eines Scheibenfräsers (61, 62, 63) hergestellt wird.

2. Verfahren nach Anspruch 1, **dadurch gekennzeichnet, dass** die innenseitige Zahnung (47, 48) im oberen Bereich (67) sowie im unteren Bereich (66) ausschliesslich unter Zuhilfenahme des Scheibenfräsers (61, 62, 63) hergestellt wird.

3. Verfahren nach einem der vorhergehenden Ansprüche, **dadurch gekennzeichnet, dass** der Rohling aus Metall, insbesondere aus nach der Bearbeitung gehärtetem Metall und/oder mit gehärteter Oberfläche, insbesondere bevorzugt aus Automatenstahl und/oder mit einer Härte von wenigstens HRC 60, bevorzugt im Bereich von HRC 64, besteht.

4. Verfahren nach einem der vorhergehenden Ansprüche, **dadurch gekennzeichnet, dass** die innenseitige Zahnung im oberen Bereich (67) durch einen ersten Scheibenfräser (61b) hergestellt wird, dessen Scheibe (63) auf der umlaufenden Aussenfläche nach vorne konisch verjüngend ausgebildet ist, wobei bevorzugtermassen der Schliffwinkel, definiert als Winkel (µ) im axialen Schnitt durch das Werkzeug zwischen einer zylindrischen Aussenfläche und der tatsächlich vorliegenden konisch verjüngenden Aussenfläche, im Bereich von 10-60°, bevorzugt im Bereich von 20-40°, insbesondere bevorzugt im Bereich von 25-35° liegt, wobei bevorzugtermassen der maximale Aussendurchmesser des ersten Scheibenfräsers (61b) im Bereich nicht mehr als 10% kleiner als der Innendurchmesser der Durchgangsbohrung im Bereich der Mittelkante (53) und kleiner als der Innendurchmesser an der Oberkante (79) der Kegelmantelinnenfläche im oberen Bereich (67) des Mahlrings (2), und wobei insbesondere bevorzugtermassen der maximale Aussendurchmesser des ersten Scheibenfräsers (61b) im wesentlichen gleich ist wie der Innendurchmesser der Durchgangsbohrung im Bereich der Mittelkante (53), bevorzugt im Bereich von +/- 5% des Innendurchmessers der Durchgangsbohrung im Bereich der Mittelkante (53).

5. Verfahren nach Anspruch 4, **dadurch gekennzeichnet, dass** der erste Scheibenfräser (61b) im gesamten Herstellungsprozess für die innenseitige Zahnung im oberen Bereich (67) unter einem festgelegten Anstellwinkel (θ), definiert als Winkel zwischen der Scheibennormalen und einer Ebene senkrecht zur Hauptachse des Mahlrings (2), geführt wird, wobei dieser Anstellwinkel (θ) bevorzugtermassen im Bereich von 10-80°, insbesondere im Bereich von 30-60°, insbesondere bevorzugt im Bereich von 35-50° liegt,
und/oder dass der erste Scheibenfräser (61b) zur Herstellung jeweils einer Nut (51) an der Oberkante (79) des oberen Bereichs (67) des Mahlrings (2) an der Kegelmantelinnenfläche in einer Startposition (P1) angesetzt wird und anschliessend unter einem Winkel, welcher spitzer ist als der Winkel (δ), welchen die Kegelmantelinnenfläche im oberen Bereich (67) mit der Ringnormalen (Z) einschliesst, unter Ausbildung der Nut (51) zur Mittelkante (53) zu einer Endposition (P2) geführt wird, so dass die Nut (51) zur Mittelkante (53) hin tiefer wird, wobei die Führung von der Startposition (P1) zur Endposition (P2) vorzugsweise zur Kegelmantelinnenfläche hin gekrümmt (85) erfolgt, und wobei insbesondere bevorzugt die Endposition (P2) soweit im Inneren zur Mittelkante (53) des Mahlrings (2) liegt, dass sich die Nut (51) wenigstens teilweise in den unteren Bereich (66) erstreckt,
und/oder dass im oberen Bereich (67) zwischen 5-15 Nuten (51) bevorzugt zwischen 7-12 Nuten (51) regelmässig über den Umfang der Kegelmantelinnenfläche verteilt gefertigt werden, wobei die Nuten vorzugsweise an der tiefsten Stelle an der Oberkante (79) eine Tiefe im Bereich von 0.5 -4 mm, insbesondere bevorzugt im Bereich von 1-3 mm, und an der tiefsten Stelle eine grössere Tiefe, insbesondere bevorzugt im Bereich von 2-6, ganz besonders bevorzugt im Bereich von 3-5 mm.

6. Verfahren nach einem der vorhergehenden Ansprüche, **dadurch gekennzeichnet, dass** der obere Bereich (67) an seiner Oberkante (79) im unbearbeiteten Zustand einen Durchmesser im Bereich von 2-6 cm, bevorzugt im Bereich von 3-4 cm aufweist, und/oder im Bereich der Mittelkante (53) im noch nicht gezahnten Zustand einen Durchmesser im Bereich von 1.5-5.5 cm, bevorzugt im Bereich von 2-3 cm, und/oder der untere Bereich (66) an seiner Unterkante (80) im unbearbeiteten Zustand einen Durchmesser im Bereich von 1.8-5.8 cm, bevorzugt im Bereich von 2.5-3.5 cm aufweist.

7. Verfahren nach einem der vorhergehenden Ansprüche, **dadurch gekennzeichnet, dass** die innenseitige Zahnung im unteren Bereich (66) durch einen zweiten Scheibenfräser (61 a) hergestellt wird, dessen Scheibe (63) auf der umlaufenden Aussenfläche nach vorne konisch erweiternd ist, wobei bevorzugtermassen der Schliffwinkel, definiert als Winkel (ε) im axialen Schnitt durch das Werkzeug zwischen einer zylindrischen Aussenfläche und der tatsächlich vorliegenden konisch erweiternden Aussenfläche, im Bereich von 5-45 °, bevorzugt im Bereich von 10-30°, insbesondere bevorzugt im Bereich von 12-20° liegt, wobei bevorzugtermassen der maximale Aussendurchmesser des zweiten Scheibenfräsers (61a) im Bereich nicht mehr als 10% kleiner ist als der Innendurchmesser der Durchgangsbohrung im Bereich der Mittelkante (53) und kleiner als der Innendurchmesser an der Unterkante (80) der Kegelmantelinnenflächen im unteren Bereich (66) des Mahlrings (2), und/oder wobei bevorzugtermassen der maximale Aussendurchmesser des zweiten Scheibenfräsers (61 a) im wesentlichen gleich ist wie der Innendurchmesser der Durchgangsbohrung im Bereich der Mittelkante (53), bevorzugt im Bereich von +/-5% des Innendurchmessers der Durchgangsbohrung im Bereich der Mittelkante (53).

8. Verfahren nach Anspruch 7, **dadurch gekennzeichnet, dass** der zweite Scheibenfräser (61 a) im gesamten Herstellungsprozess für die innenseitige Zahnung im unteren Bereich (66) unter einem festgelegten Anstellwinkel (β), definiert als Winkel zwischen der scheibennormalen und einer Ebene senkrecht zur Hauptachse des Mahlrings (2), geführt wird, wobei dieser Anstellwinkel (β) bevorzugtermassen im Bereich von 20-45°, vorzugsweise im Bereich von 25-40°, insbesondere bevorzugt im Bereich von 30-38° liegt, und/oder dass der zweite Scheibenfräser (61a) zur Herstellung jeweils einer Nut der Feinzahnung (48) im wesentlichen ausschliesslich in Form eines Einstichs des zweiten Scheibenfräsers (61 a) in einer Richtung im wesentlichen senkrecht zur Flächennormalen der Kegelmantelinnenfläche im unteren Bereich (66) an der Stelle des Einstichs geführt wird, wobei bevorzugtermassen die jeweilige Ansatzstelle für den Einstich auf der viertel axialen Höhe oder oberhalb der viertel axialen Höhe zwischen Unterkante (80) und Mittelkante (53) liegt, vorzugsweise zwischen der viertel und 3/4 der axialen Höhe zwischen Unterkante (80) und Mittelkante (53).

9. Verfahren nach Ansprüche 8, **dadurch gekennzeichnet, dass** beim Ansatz des zweiten Scheibenfräsers (61a) beim Beginn des Prozesses der vordere Achspunkt der Scheibe (63) des zweiten Scheibenfräsers (61a) von der zentralen Hauptachse (Z) zur Mittelkante (53) um einen Versatz (V2) versetzt ist, wobei dieser Versatz im Bereich von 1-4 mm, insbesondere bevorzugt im Bereich von 1-3 mm liegt.

10. Verfahren nach einem der Ansprüche 7-9, **dadurch gekennzeichnet, dass** die Feinzahnung (48) im Bereich der Unterkante (80) des unteren Bereichs (66) eine Tiefe im Bereich von 0.1-1 mm, insbesondere bevorzugt im Bereich von 0.2-0.4 mm aufweist, und/oder an der tiefsten Stelle an der Kegelmantelinnenfläche im unteren Bereich (66) eine Tiefe im Bereich von 0.5-2 mm, insbesondere bevorzugt im Bereich von 0.8-1.5 mm.

11. Verfahren nach einem der vorhergehenden Ansprüche 7-10, **dadurch gekennzeichnet, dass** im unteren Bereich (66) zwischen 2-6, bevorzugt 4-5 Kerben der Feinzahnung (48) in bevorzugt gleichmässiger Verteilung pro Kerbe (51) im oberen Bereich (67) vorgesehen werden.

12. Verfahren nach einem der vorhergehenden Ansprüche, **dadurch gekennzeichnet, dass** der Winkel (δ), welchen die Kegelmantelinnenfläche im oberen Bereich (67) mit der Ringnormalen (Z) einschliesst, im Bereich von 15-30°, bevorzugt 20-25 °, insbesondere bevorzugt im Bereich von 21-23° liegt und/oder, dass der Winkel (γ), welchen die Kegelmantelinnenflächen im unteren Bereich (66) mit der Ringnormalen (Z) einschliesst, im Bereich von 10-20°, bevorzugt 12-18°, insbesondere bevorzugt 14-16° liegt.

13. Verfahren nach einem der vorhergehenden Ansprüche, **dadurch gekennzeichnet, dass** am Mahlring (2) und/oder an dem zugehörigen Mahlkegel (3), insbesondere im an die Unterkante (80, 86) angrenzenden Bereich der Feinzahnung (48, 58), und bevorzugt über eine wesentlich geringere Höhe als die minimale Höhe der Feinzahnung (48,58), Abschnitte (60) mit im wesentlichen konusförmiger Oberfläche ausgebildet werden oder belassen bleiben, so dass sich in diesem Bereich ein kurzer paralleler Mahlspalt ausbildet, welcher bevorzugt den Mahlspalt austrittsseitig abschliesst, wobei bevorzugtermassen diese Abschnitte (60) erzeugt werden, indem die konische Oberfläche des Rohlings (2a, 3a) in diesen Bereichen nicht mit dem Scheibenfräser (61 a, 61 d) bearbeitet wird.

14. Mahlring (2) hergestellt nach einem Verfahren nach einem der vorhergehenden Ansprüche.

15. Mahlwerk, Mahlwerkzeug oder Kaffeemaschine mit einem Mahlring (2) nach Anspruch 14.
